(19) Europäisches Patentamt
European Patent Office
Office européen des brevets

(11) **EP 2 526 644 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(21) Anmeldenummer: **10798277.9**

(22) Anmeldetag: **20.10.2010**

(51) Int Cl.:
*G01S 19/37* *(2010.01)*    *H04B 1/707* *(2011.01)*

(86) Internationale Anmeldenummer:
**PCT/EP2010/065813**

(87) Internationale Veröffentlichungsnummer:
**WO 2011/088907 (28.07.2011 Gazette 2011/30)**

(54) **MEHRFREQUENZBANDEMPFÄNGER**

MULTI-FREQUENCY-BAND RECEIVER

RÉCEPTEUR À BANDE MULTIFRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2010 DE 102010001147**

(43) Veröffentlichungstag der Anmeldung:
**28.11.2012 Patentblatt 2012/48**

(73) Patentinhaber: **Fraunhofer-Gesellschaft zur Förderung der angewandten Forschung e.V.
80686 München (DE)**

(72) Erfinder:
• **RÜGAMER, Alexander
97342 Obernbreit (DE)**
• **URQUIJO, Santiago
91056 Erlangen (DE)**

(74) Vertreter: **Zinkler, Franz et al
Schoppe, Zimmermann, Stöckeler
Zinkler, Schenk & Partner mbB
Patentanwälte
Radlkoferstrasse 2
81373 München (DE)**

(56) Entgegenhaltungen:
WO-A1-2009/146862    DE-A1-102008 026 698
US-A- 5 722 053

**Beschreibung**

Ausführungsbeispiele gemäß der Erfindung beziehen sich auf die drahtlose Datenkommunikation und im Besonderen auf einen Mehrfrequenzbandempfänger und auf ein Verfahren zum Empfangen von Codemultiplex-Signalen mit einem Mehrfrequenzbandempfänger.

In einigen Jahren werden zumindest vier unabhängige, aber interoperable weltweite Satellitennavigationssysteme (GNSS - global navigation satellite systems) zur Verfügung stehen: Galileo, GPS III, GLONASS und COMPASS. Diese neuen und modernisierten Systeme werden neue Signale und Dienste bereitstellen. Es wird das erste Mal sein, dass Open-Service-Signale (Frei-Service-Signale) weltweit auf mehr als einem Frequenzband zur Verfügung stehen. Die Leistungsfähigkeit von Empfängern wird verbessert werden, indem die Mehrbandnavigation genutzt wird.

Beispielsweise kann eine erhöhte Genauigkeit erreicht werden. Mehrband-Empfang ermöglicht, den Ionosphärenfehler zu messen und ihn zu beseitigen. Die neuen Breitbandsignale, vor allem das Galileo E5 mit einer Bandbreite von mehr als 72 MHz, versprechen eine außergewöhnliche Mehrwegebeständigkeit und eine erhöhte Nachführungsgenauigkeit.

Ebenso kann die Verfügbarkeit erhöht werden. Die Interoperabilität zwischen allen GNSS-Systemen erhöht die Verfügbarkeit der Raumfahrzeuge von derzeit 24 GPS Navstar und einigen wenigen GLONASS auf über 100 Raumfahrzeuge mit zusätzlichen Galileo- und COMPASS-Satelliten. Sowohl die Dienstverfügbarkeit, z.B. in Häuserschluchten, als auch die Dilution of Precision (DOP) (dt. Verringerung der Genauigkeit) kann verbessert werden, und somit auch die Positionsgenauigkeit.

Zusätzlich kann die Robustheit erhöht werden. Falls ein Signalband eine Funktionsstörung aufweist, kann immer noch ein anderes verwendet werden.

Ferner kann die Integrität verbessert werden. Galileo wird Integritätsdaten im Rahmen seines Dienstes zum Schutz menschlichen Lebens in dem Nachrichtentyp I/NAV, der über E5b-I und E1-B (siehe "Galileo Open Service Signal in Space Interface Control Document (OS SIS ICD), Draft 1," techn. rep., European Space Agency/European GNSS Supervisory Authority, February 2008") ausgestrahlt wird, liefern. Dieser Dienst ist für viele sicherheitskritische Anwendungen von essentieller Bedeutung.

Wenn diese neuen GNSS-Signale schließlich zur Verfügung stehen werden, werden durch die oben aufgeführten Vorteile mehrere neue oder verbesserte Anwendungen möglich, vor allem auf dem Massenmarktsektor. Jedoch erfordern Massenmarktanwendungen kleine, leistungsarme und kostengünstige Empfängervorrichtungen. Deshalb ist eine integrierte Lösung erwünscht.

Front-End-Empfänger (Eingangskomponente eines Empfängers) für diese neuen und nahezu alle Breitbandsignale sind bereits erhältlich, bestehen jedoch meistens aus großen, teuren und einen hohen Leistungsverbrauch aufweisenden diskreten Lösungen für professionelle High-End-Anwendungen. Erste integrierte Mehrband-Front-End-Lösungen sind erhältlich, aber noch verbesserungsfähig.

Heutzutage sind vier unterschiedliche Lösungsansätze für Mehrband-Empfänger üblich.

Für spezielle Anwendungen wie GNSS-Referenzempfänger gibt es die diskreten High-End-Front-Ends (oder: Eingangskomponenten der oberen Leistungsklasse, siehe z.B. "F. Foerster, A. Carrera, N Lucas, and G. Rohmer, "High Performance Receiver Front-End for Multiple Galileo Frequencies", in Proceedings of the 18th International Technical Meeting of the Satellite Division of the Institute of Navigation ION GNSS 2005, pp. 935 - 940, Sep. 2005"). Diese Front-Ends liefern höchste Genauigkeit, eignen sich jedoch aufgrund ihres hohen Preises, ihres sehr hohen Leistungsverbrauchs und ihrer Größe nicht für die beabsichtigte Anwendung.

Durch den Fortschritt, der auf dem Gebiet leistungsstarker Analog/Digital-Wandler (ADC, analog-to-digital converters) gemacht wurde, werden RF- (RF = radio frequency, Hochfrequenz) oder Unterabtastungs-ADC-Front-Ends auch für Breitbandsignale immer attraktiver (siehe "A. Alonso, J.-M. Perre, and I. Arizaga, "A Direct Sampling Digital Receiver For Multiple GNSS Signals," in Proc. of ENC-GNSS 2008, 2008", "E: R. Parada, F. Chastellain, C. Botteron, Y. Tawk, and P.-A. Farine, "Design of a GPS and Galileo Multi-Frequency Front-End," in IEEE 69th Vehicular Technology Conference: VTC2009-Spring 26-29 April 2009, Barcelona, Spain, 20092"). Die gewünschten Signale werden gefiltert und anschließend unter Verwendung von absichtlichem Aliasing bei der Analog/Digital-Umwandlung abwärts umgesetzt. Diese Art von Architektur erfordert einen Takt mit extrem niedrigem Jitter und einen ADC mit einer hohen analogen Eingangsfrequenzbandbreite. Die Unterabtast-Architektur weist einen hohen Leistungsverbrauch im Front-End und auch bei der folgenden digitalen Basisband-Signalverarbeitung auf. Allgemein unterliegt diese Architektur Störungen, einem Aliasing von Außerbandrauschen in den IF-Bereich (Zwischenfrequenzbereich) und einer potentiellen Instabilität aufgrund der hohen Verstärkung, die innerhalb eines Frequenzbereichs erforderlich ist. Deshalb ist die Unterabtast-Architektur nicht für einen integrierten Empfänger des hochentwickelten Massenmarktes geeignet.

Eine andere Art und Weise, auf die ein Mehrbandempfang bereitgestellt werden kann, ist durch Verwendung separater Einzelfrequenz-Front-Ends für jedes gewünschte GNSS-Signal oder durch Integrieren mehrerer mehr oder weniger allein stehender Empfänger auf einem einzigen Chip (siehe "Z. Gradincic, "Multiband GNSS Receiver," 2007. US 20070096980 A1"). Dies ist der unkomplizierte Weg, er unterliegt jedoch hausgemachten Störungen durch die verschiedenen benötigten Frequenzsynthesizer und ist bezüglich des Leistungsverbrauchs und der Größe keine wirtschaftliche oder optimierte Lösung.

Andere vollständig integrierte Mehrband-Front-End-Architektur-Lösungen, die bei "M. Detratti, E. Lopez, E. Perez, and R. Palacio, "Dual-Band RF Front-End Solution for Hybrid Galileo/GPS Mass Market Receivers," in Consumer Communications and Networking Coference, 2008. CCNC 2008, 5th IEEE, pp. 603-607, Jan. 2008" und "J. Ko, J. Kim, S. Cho, and K. Lee, "A 19-mW 2,6 mm2L1/12 dual-band CMOS GPS receiver," Solid-State Circuits, IEEE Journal of, vol. 40, pp. 1414-1425, July 2005" vorgeschlagen werden, verwenden einen Schalter zur Bandauswahl. Deshalb können sie zu jeglichem Zeitpunkt immer nur ein einziges Band empfangen, wodurch die Vorteile einer gleichzeitigen Mehrfrequenz-GNSS-Verarbeitung bzw. Ionosphärenkorrektur zunichte gemacht werden.

Ein Beispiel für einen Mehrfrequenzbandempfänger zeigt auch die Offenlegungsschrift DE 102008026698 A1. Der beschriebene Mehrfrequenzbandempfänger umfasst einen ersten Pfad, der ausgelegt ist, um ein erstes Frequenzband und ein zweites Frequenzband zu verarbeiten, und einen zweiten Pfad, der ausgelegt ist, um ein drittes Frequenzband zu verarbeiten. Dabei weisen das erste Frequenzband und das zweite Frequenzband einen kleineren Abstand als das erste und das dritte sowie das zweite und das dritte Frequenzband auf.

Die Aufgabe der vorliegenden Erfindung ist es, einen Mehrfrequenzbandempfänger zur Verarbeitung von zumindest zwei Codemultiplex-Signalen zu schaffen, der eine geringe Anzahl an Komponenten benötigt und eine Anpassung der Empfangsqualität von zumindest zwei Basisbandsignalen, welche die Daten der zumindest zwei Codemultiplex-Signale repräsentieren, zu ermöglichen.

Diese Aufgabe wird durch einen Mehrfrequenzbandempfänger gemäß Anspruch 1 oder ein Verfahren gemäß Anspruch 20 gelöst.

Ein Ausführungsbeispiel gemäß der Erfindung schafft einen Mehrfrequenzbandempfänger, der einen ersten Empfangspfad, einen zweiten Empfangspfad, einen Kombinierer, eine Codemultiplex-Basisbandstufe und eine Verstärkersteuerung aufweist. Der erste Empfangspfad ist ausgelegt, um ein erstes Codemultiplex-Signal zu empfangen und zu bearbeiten, und der zweite Empfangspfad ist ausgelegt, um ein zweites Codemultiplex-Signal zu empfangen und zu bearbeiten. Dabei weist der erste Empfangspfad oder der zweite Empfangspfad einen Verstärker mit variablem Verstärkungsfaktor auf. Der Kombinierer ist ausgelegt, um das erste bearbeitete Codemultiplex-Signal und das zweite bearbeitete Codemultiplex-Signal zu überlagern. Die Codemultiplex-Basisbandstufe ist ausgelegt, um das überlagerte Codemultiplex-Signal zu verarbeiten, um ein erstes Basisband-Empfangssignal und ein zweites Basisband-Empfangssignal zu erhalten und zu verwenden. Dabei repräsentiert das erste Basisband-Empfangssignal Daten des ersten Codemultiplex-Signals und das zweite Basisband-Empfangssignal Daten des zweiten Codemultiplex-Signals. Des Weiteren ist die Verstärkersteuerung ausgelegt, um den Verstärkungsfaktor des Verstärkers mit variablem Verstärkungsfaktor zu steuern, so dass das erste Basisband-Empfangssignal oder das zweite Basisband-Empfangssignal eine variabel vorgebbare, betriebszustandsabhängige Mindestempfangsqualität aufweist.

Ausführungsbeispiele gemäß der Erfindung basieren auf dem Kerngedanken, dass durch das gezielte Verstärken eines der beiden Codemultiplex-Signale in den Empfangspfaden oder beide Codemultiplex-Signale unabhängig voneinander, die Empfangsqualität von Basisband-Empfangssignalen beeinflusst werden können. Dies kann beispielsweise dadurch erklärt werden, dass durch ein positives Verstärken eines Codemultiplex-Signals ein Signal-zu-Rausch-Verhältnis des zugehörigen Basisband-Empfangssignals verbessert werden kann, im Gegenzug jedoch das Signal-zu-Rausch-Verhältnis des anderen Basisband-Empfangssignals verschlechtert wird. Durch eine negative Verstärkung oder Dämpfung kann ein umgekehrter Effekt hervorgerufen werden. Durch diese variable Steuerung der Empfangsqualität der Basisband-Empfangssignale können unterschiedliche Bedingungen an die Empfangsqualität der unterschiedlichen Basisband-Empfangssignale in verschiedenen Betriebszuständen des Mehrfrequenzbandempfängers berücksichtigt werden. Es kann beispielsweise sein, dass in einem Betriebszustand das erste Basisband-Empfangssignal in möglichst hoher Empfangsqualität vorliegen soll, während das zweite Basisband-Empfangssignal in nur geringer Empfangsqualität benötigt wird, wohingegen der umgekehrte Fall in einem anderen Betriebszustand erwünscht ist. Diese unterschiedlichen Bedingungen in den unterschiedlichen Betriebszuständen des Mehrfrequenzbandempfängers können durch die beschriebene Steuerung des Verstärkungsfaktors des Verstärkers berücksichtigt werden, wodurch die Leistungsfähigkeit des Mehrfrequenzbandempfängers insgesamt verbessert werden kann.

Einige Ausführungsbeispiele gemäß der Erfindung umfassen einen Empfangsqualitätsbestimmer, der eine Empfangsqualität des ersten Basisband-Empfangssignals oder eine Empfangsqualität des zweiten Basisband-Empfangssignals bestimmt. Die Verstärkersteuerung kann dann basierend auf der bestimmten Empfangsqualität des ersten Basisband-Empfangssignals oder des zweiten Basisband-Empfangssignals den Verstärkungsfaktor steuern. Durch die Detektion der Empfangsqualität jenes Basisband-Empfangssignals, das die variabel vorgebbare, betriebszustandsabhängige Mindestempfangsqualität aufweisen soll, kann auf sich ändernde Empfangsbedingungen reagiert werden, indem die Verstärkersteuerung den Verstärkungsfaktor entsprechend anpasst. Vor allem bei mobilen Mehrfrequenzbandempfängern können sich die Empfangsbedingungen aufgrund der sich ändernden Umwelt ständig ändern was durch das beschriebene Konzept berücksichtigt werden kann.

Weitere Ausführungsbeispiele gemäß der Erfindung umfassen eine Betriebszustandssteuerung. Die Betriebszustandssteuerung kann einen Wert der variabel vorgebbaren, betriebszustandsabhängigen Mindestempfangsqualität basierend auf einem Betriebszustand des Mehrfrequenzbandempfängers vorgeben.

Einige Ausführungsbeispiele gemäß der Erfindung beziehen sich auf einen Satellitennavigationsempfänger mit einem Mehrfrequenzbandempfänger entsprechend dem beschriebenen Konzept.

Ausführungsbeispiele gemäß der Erfindung werden nachfolgend Bezug nehmend auf die beiliegenden Figuren näher erläutert. Es zeigen:

Fig. 1a    ein Blockschaltbild eines Mehrfrequenzbandempfängers;
Fig. 1b    eine schematische Darstellung des Einfluss des Verstärkungsfaktors auf die Empfangsqualität des ersten und zweiten Basisband-Empfangssignals;
Fig. 2    ein Blockschaltbild eines Mehrfrequenzbandempfängers;
Fig. 3    ein Blockschaltbild eines Mehrfrequenzbandempfängers;
Fig. 4    ein Blockschaltbild eines Mehrfrequenzbandempfängers;
Fig. 5    eine schematische Darstellung von GPS- und Galileo-Signalen;
Fig. 6    eine schematische Darstellung einer Abwärtswandlung von Signalen und deren Zwischenfrequenzen;
Fig. 7    eine schematische Darstellung eines gefilterten Basisband-Signals (Galileo E5 und E1);
Fig. 8    eine schematische Darstellung eines durch einen Verstärker mit variablem Verstärkungsfaktor einstellbaren Superpositions-Rauschverlusts (mit einem Verstärker mit variablem Verstärkungsfaktor im E1-Pfad);
Fig. 9    eine schematische Darstellung der erreichbaren Genauigkeit einer Positionsbestimmung in Abhängigkeit des Signal-zu-Rausch-Verhältnisses;
Fig. 10    ein Flussdiagramm eines Verfahrens zum Empfangen von Signalen mit einem Mehrfrequenzbandempfänger;
Fig. 11    eine schematische Darstellung der Überlagerungssignal-Verschlechterungseffekte in Form einer Überlagerung von Verlusten und Rauschen;
Fig. 12    ein Diagramm, dass den Verfolgungsfehler gegenüber $C/N_0$ zeigt;
Fig. 13    ein Diagramm, dass ein durch einen E1-VGA einstellbares Überlagerungsrauschen zeigt;
Fig. 14    ein Diagramm, dass den Verfolgungsfehler nach Signalkombination mit einstellbarem Überlagerungsrauschen zeigt; und
Fig. 15    eine schematische Darstellung einer Abwärtswandlung von Signalen und deren Zwischenfrequenzen.

Im Folgenden werden teilweise für Objekte und Funktionseinheiten, die gleiche oder ähnliche funktionelle Eigenschaften aufweisen, gleiche Bezugszeichen verwendet. Des Weiteren können optionale Merkmale der verschiedenen Ausführungsbeispiele miteinander kombinierbar oder zueinander austauschbar sein.

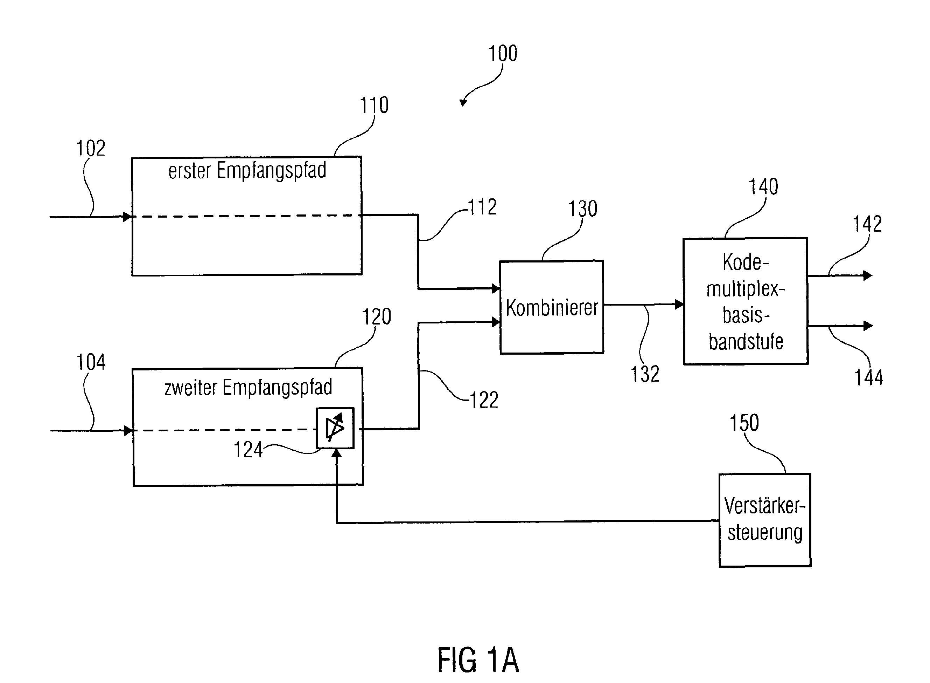

Fig. 1a zeigt ein Blockschaltbild eines Mehrfrequenzbandempfängers 100 entsprechend eines Ausführungsbeispiel gemäß der Erfindung. Der Mehrfrequenzbandempfänger 100 umfasst einen ersten Empfangspfad 110, einen zweiten Empfangspfad 120, einen Kombinierer 130, eine Codemultiplex-Basisbandstufe 140 und eine Verstärkersteuerung 150. Zusätzlich weist der erste Empfangspfad 110 oder der zweite Empfangspfad 120 einen Verstärker 124 mit variablem Verstärkungsfaktor auf. Der erste Empfangspfad 110 und der zweite Empfangspfad 120 sind jeweils mit dem Kombinierer 130 verbunden. Des Weiteren ist der Kombinierer 130 mit der Codemultiplex-Basisbandstufe 140 und die Verstärkersteuerung 150 mit dem Verstärker 124 verbunden.

Der erste Empfangspfad 110 empfängt und bearbeitet ein erstes Codemultiplex-Signal 102 und der zweite Empfangspfad 120 empfängt und bearbeitet ein zweites Codemultiplex-Signal 104. Des Weiteren überlagert der Kombinierer 130 das erste bearbeitete Codemultiplex-Signal 112 und das zweite bearbeitete Codemultiplex-Signal 122. Die Codemultiplex-Basisbandstufe 140 verarbeitet das überlagerte Codemultiplex-Signal 132, um ein erstes Basisband-Empfangssignal 142 und ein zweites Basisband-Empfangssignal 144 zu erhalten und zu verwenden. Dabei repräsentiert das erste Basisband-Empfangssignal 142 Daten des ersten Codemultiplex-Signals 102 und das zweite Basisband-Empfangssignal 144 Daten des zweiten Codemultiplex-Signals 104. Des Weiteren steuert die Verstärkersteuerung 150 den Verstärkungsfaktor des Verstärkers 124 mit variablem Verstärkungsfaktor, sodass das erste Basisband-Empfangssignal 142 oder das zweite Basisband-Empfangssignal 144 eine variabel vorgebbare, betriebszustandsabhängige Mindestempfangsqualität aufweist.

Der erste Empfangspfad 110 und der zweite Empfangspfad 120 können die Codemultiplex-Signale 102, 104 beispielsweise von einer gemeinsamen Antenne oder von zwei unabhängigen Antennen empfangen.

Die Codemultiplex-Signale 102, 104 können beispielsweise entsprechend eines Code-multiplex-Verfahrens (Code Division Multiple Access, CDMA) oder eines diskreten Sequenzspreizspektrum-Verfahrens (Direct Sequence Spread Spectrum, DSSS) erzeugt worden sein. Dadurch können die Daten der unterschiedlichen Codemultiplex-Signale trotz Überlagerung im Kombinierer 130 durch die Codemultiplex-Basisbandstufe 140 voneinander getrennt werden und als unabhängiger Basisband-Empfangssignale verwendet oder bereitgestellt werden.

Der in Fig. 1a gezeigte Verstärker 124 ist in diesem Beispiel in dem zweiten Empfangspfad 120 angeordnet. Der Verstärker 124 kann jedoch genauso im ersten Empfangspfad 110 angeordnet sein. Alternativ können beide Empfangspfade einen Verstärker 124 mit variablem Verstärkungsfaktor aufweisen. Die Verstärkersteuerung 140 kann dann den Verstärkungsfaktor des Verstärkers des ersten Empfangspfads 110 unabhängig von dem Verstärkungsfaktor des Verstärkers des zweiten Empfangspfads 120 steuern, so dass das erste Basisband-Empfangssignal 142 oder das zweite Basisband-Empfangssignal 144 die variabel vorgebbare, betriebszustandsabhängige Mindestempfangsqualität aufweist.

Durch die variable Verstärkung von Signalen im ersten Empfangspfad 110 oder im zweiten Empfangspfad 120 kann die Empfangsqualität der Basisband-Empfangssignale beeinflusst werden. Durch die Überlagerung der Codemultiplex-Signale durch den Kombinierer 130 stehen die Empfangsqualitäten der daraus extrahierten Basisband-Empfangssignale in einer Abhängigkeit zueinander. Wird beispielsweise das Signal im ersten Empfangspfad positiv verstärkt, so verbessert sich die Empfangsqualität des ersten Basisband-Empfangssignals 142. Im Gegenzug verschlechtert sich die Empfangsqualität des zweiten Basisband-Empfangssignals 144. Wird ein Signal im ersten Empfangspfad negativ verstärkt, was einer Dämpfung entspricht, erfolgt eine umgekehrte Veränderung der Empfangsqualitäten der Basisband-Empfangssignale. Daher können durch eine gezielte Steuerung des Verstärkungsfaktors des Verstärkers 124 die Empfangsqualitäten der unterschiedlichen Basisband-Empfangssignale für den jeweiligen Betriebszustand des Mehrfrequenzbandempfängers angepasst werden.

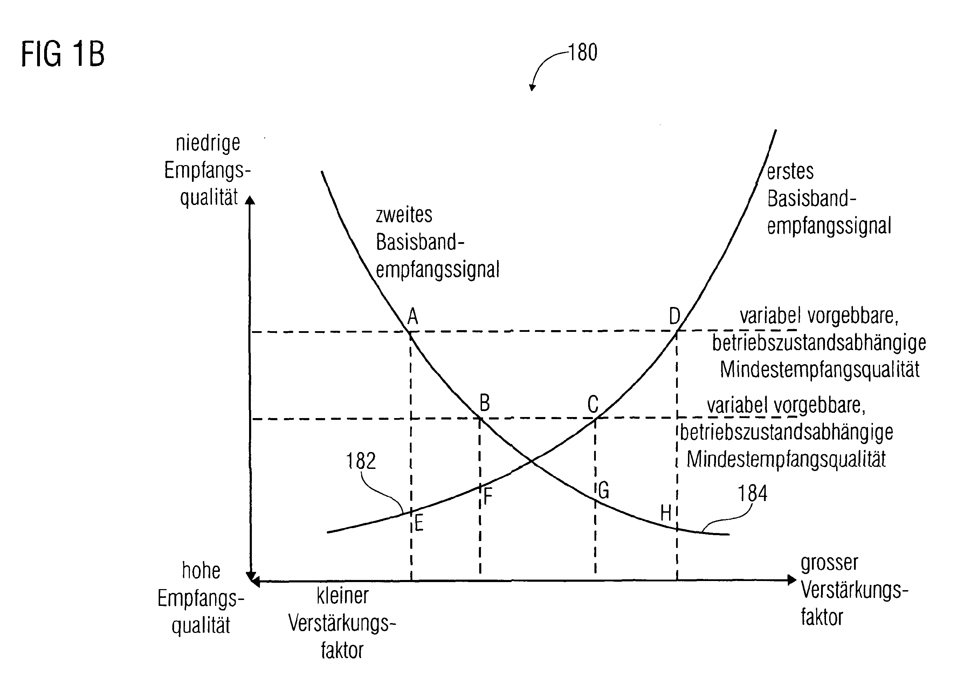

Dieser Sachverhalt ist beispielsweise schematisch in Fig. 1b gezeigt. Fig. 1b zeigt ein Beispiel 180 für die Auswirkung einer Veränderung des Verstärkungsfaktors auf die Empfangsqualität des ersten und zweiten Basisband-Empfangssignals. Dabei ist angenommen, dass sich der Verstärker 124, wie in Fig. 1a gezeigt, im zweiten Empfangspfad 120 befindet. Steuert die Verstärkersteuerung 150 den Verstärkungsfaktor in Richtung eines großen Verstärkungsfaktors, nimmt die Empfangsqualität des zweiten Basisband-Empfangssignals 144 zu. Umgekehrt ist für kleine Verstärkungsfaktoren eine Abnahme der Empfangsqualität des zweiten Basisband-Empfangssignals 144 festzustellen. Dieses Verhalten 184 ist durch die von links oben nach rechts unten verlaufende Kurve dargestellt. Das erste Basisband-Empfangssignal 142 zeigt im Gegensatz dazu ein umgekehrtes Verhalten 182. Es weist für kleine Verstärkungsfaktoren eine hohe Empfangsqualität und für große Verstärkungsfaktoren eine niedrige Empfangsqualität auf. Dieses Verhalten 182 ist durch die von links unten nach rechts oben verlaufende Kurve dargestellt. Das dargestellte Verhalten resultiert beispielsweise aus dem jeweils unterschiedlich starken Einfluss des Rauschens von einem Signal auf das andere. Zusätzlich sind durch die zwei horizontalen, strichlierten Linien zwei Beispiele für variabel vorgebbare, betriebszustandsabhängige Mindestempfangsqualitäten angedeutet. Beispielsweise kann in einem Betriebszustand des Mehrfrequenzbandempfängers eine niedrige Empfangsqualität des zweiten Basisband-Empfangssignals 144 ausreichend sein. Dies kann durch die Steuerung des Verstärkungsfaktors auf einem Wert, der dem Punkt A entspricht, realisiert werden. Dadurch kann im Gegenzug eine relativ hohe Empfangsqualität des ersten Basisband-Empfangssignals 142 erreicht werden, wie bei Punkt E gezeigt ist. Ist in einem anderen Betriebszustand des Mehrfrequenzbandempfängers eine höhere Empfangsqualität für das zweite Basisband-Empfangssignal 144 gefordert, muss der Verstärkungsfaktor z.B. bis zu Punkt D erhöht werden. Dadurch verschlechtert sich im Gegenzug die Empfangsqualität des ersten Basisband-Empfangssignals 142, wie in Punkt F gezeigt ist. Umgekehrt kann in einem Betriebszustand auch für das erste Basisband-Empfangssignal 142 eine variabel vorgebbare, betriebszustandsabhängige Mindestempfangsqualität gefordert sein, wie bei den Punkten C und D gezeigt ist. Dadurch wird, entsprechend der vorherigen Beschreibung, auch die Empfangsqualität des zweiten Basisband-Empfangssignals 144 beeinflusst.

Durch die Einstellung des Verstärkungsfaktors, so dass eines der beiden Basisband-Empfangssignale nur die betriebszustandsabhängige Mindestempfangsqualität erreicht wird, kann die Empfangsqualität im anderen Basisband-Empfangssignal gegenüber bekannten Verfahren deutlich erhöht werden.

Es ist auch möglich, dass die variabel vorgebbare, betriebszustandsabhängige Mindestempfangsqualität für ein Basisband-Empfangssignal in einem Betriebszustand so hoch ist, dass das andere Basisband-Empfangssignal nur noch mit einer Empfangqualität empfangen werden kann, die niedriger ist als die variabel vorgebbare, betriebszustandsabhängige Mindestempfangsqualität. Dies wäre in Fig. 1b beispielsweise der Fall, wenn für das zweite Basisband-Empfangssignal eine variabel vorgebbare, betriebszustandsabhängige Mindestempfangsqualität gefordert ist, die bei Punkt G oder H liegen würde. Für das erste Basisband-Empfangssignal wäre dann durch das beschriebene Konzept zumindest noch eine Empfangsqualität entsprechend der Punkte C oder D möglich.

In anderen Worten, durch eine Veränderung des Verstärkungsfaktors des Verstärkers kann ein Verhältnis, z. B. eines Signal-zu-Rausch-Verhältnis des ersten Basisband-Empfangssignals 142 und eines Signal-zu-Rausch-Verhältnis des zweiten Basisband-Empfangssignals 144 zueinander verändert werden. Genauer gesagt, durch eine Vorgabe eines ersten Werts der variabel vorgebbaren, betriebszustandsabhängigen Mindestempfangsqualität für das erste Basisband-Empfangssignal 142 oder das zweite Basisband-Empfangssignal 144, weist das jeweils andere Basisband-Empfangssignal einen ersten Wert seiner Empfangsqualität auf und durch eine Vorgabe eines zweiten Werts der variabel vorgebbaren, betriebszustandsabhängigen Mindestempfangsqualität für das erste Basisband-Empfangssignal 142 oder das zweite Basisband-Empfangssignal 144 weist das jeweils andere Basisband-Empfangssignal einen zweiten Wert seiner Empfangsqualität auf. Dabei ist der erste Wert der Empfangsqualität des anderen Basisband-Empfangssignals kleiner als der zweite Wert der Empfangsqualität des anderen Basisband-Empfangssignals, wenn der erste Wert der variabel vorgebbaren, betriebszustandsabhängigen Mindestempfangsqualität größer ist als der zweite Wert der variabel vorgebbaren, betriebszustandsabhängigen Mindestempfangsqualität.

Ferner ist es möglich, dass die Verstärkersteuerung 150 den Verstärkungsfaktor steuert, sodass das erste Basisband-Empfangssignal 142 oder das zweite Basisband-Empfangssignal 144 eine variabel vorgebbare, betriebszustandsabhängige Mindestempfangsqualität aufweist und das jeweils andere Basisband-Empfangssignal eine Empfangsqualität größer als die variabel vorgebbare, betriebszustandsabhängige Mindestempfangsqualität aufweist.

Die Empfangsqualität eines Basisband-Empfangssignals kann beispielsweise durch ein Signal-zu-Rausch-Verhältnis (SNR, signal-to-noise-ratio), ein summiertes Rauschen, Superpositions-Rauschverluste, Flankensteilheit von Signalflanken, Jitter, Frequenzgenauigkeit, Zeitengenauigkeit oder eine andere Größe, die eine Bewertung der Empfangsqualität ermöglicht, charakterisiert sein. Beispielsweise kann in Satellitennavigationssystemen eine Position umso genauer bestimmt werden, je genauer die Korrelationsspitzen zeitlich erfasst werden können. Die Genauigkeit der zeitlichen Erfassung ist dabei proportional zum Rauschen (also der Empfangsqualität) des Signals und daher ist auch die Genauigkeit der Positionsbestimmung proportional zum Rauschen des Signals.

Der erste und zweite Empfangspfad empfangen und bearbeiten die Codemultiplex-Signale. Dabei kann der erste Empfangspfad 110 beispielsweise das erste Codemultiplex-Signal 102 bearbeiten, so dass das erste bearbeitete Codemultiplex-Signal 112 Frequenzen innerhalb eines Basisbands der Codemultiplex-Basisbandstufe 140 aufweist. Genauso kann der zweite Empfangspfad 120 das zweite Codemultiplex-Signal 104 bearbeiten, so dass das zweite bearbeitete Codemultiplex-Signal 122 Frequenzen innerhalb des Basisbands der Codemultiplex-Basisbandstufe 140 aufweist. In anderen Worten, die Empfangspfade können dazu ausgelegt sein, empfangene Codemultiplex-Signale ins Basisband der Codemultiplex-Basisbandstufe 140 abwärts zu mischen. Zusätzlich können die Empfangspfade beispielsweise auch noch Verstärker und Filter zur Bearbeitung der empfangenen Codemultiplex-Signale aufweisen.

Bei dem Verstärker 124 mit variablem Verstärkungsfaktor handelt es sich beispielsweise um einen analogen oder digitalen spannungsgesteuerten Verstärker (VCA, Voltage Controlled Amplifier) oder um einen stromgesteuerten Verstärker, der durch ein Signal der Verstärkersteuerung 150 gesteuert wird. Die Verstärkersteuerung 150 kann Teil der Codemultiplex-Basisbandstufe 140 oder, wie in Fig. 1a gezeigt, eine unabhängige Hardware-Einheit sein.

Die Kodemultiplex-Basisbandstufe 140 kann die Basisband-Empfangssignale verwenden, um die enthalten Daten Auszuwerten (z.B. zur Fehlerkorrektur) oder die Basisband-Empfangssignale verwenden, um diese einem nachfolgenden digitalen Signalprozessor (DSP) zur Auswertung bereitzustellen.

Des Weiteren kann der Mehrfrequenzbandempfänger 100 eine Oszillatorstufe zur Bereitstellung eines Lokaloszillatorsignals aufweisen. In diesem Zusammenhang kann der erste Empfangspfad 110 einen Mischer umfassen, der mit dem Lokaloszillatorsignal versorgbar ist und der zweite Empfangspfad 120 einen Mischer aufweisen, der ebenfalls mit dem Lokaloszillatorsignal versorgbar ist. Durch die Mischer können die empfangenen Codemultiplex-Signale in den Empfangspfaden abwärts gemischt werden. Alternativ können die Mischer in den Empfangspfaden als Inphasen-Quadraturphasen-Mischer implementiert sein. Die Oszillatorstufe kann dann das Lokaloszillatorsignal so liefern, dass es eine Inphasen-Komponente und eine Quadraturphasen-Komponente aufweist, die dem Inphasen-Quadraturphasen-Mischer in dem ersten Empfangspfad 110 und dem Inphasen-Quadraturphasen-Mischer in dem zweiten Empfangspfad 120 zugeführt werden kann.

Optional kann der Mehrfrequenzbandempfänger 100 eine Inphasen-Quadraturphasen-Architektur aufweisen. Dabei kann der erste Empfangspfad 110 einen Inphasen-Ausgang und einen Quadraturphasen-Ausgang sowie auch der zweite Empfangspfad 120 einen Inphasen-Ausgang und einen Quadraturphasen-Ausgang und die Codemultiplex-Basisbandstufe 140 einen Inphasen-Eingang und einen Quadraturphasen-Eingang aufweisen. Der Kombinierer 130 kann ein Signal an dem Inphasen-Ausgang des ersten Empfangspfads 110 und ein Signal an dem Inphasen-Ausgang des zweiten Empfangspfads 120 überlagern und der Codemultiplex-Basisbandstufe 140 an dem Inphasen-Eingang zur Verfügung stellen. Genauso kann der Kombinierer 130 ein Signal an dem Quadraturphasen-Ausgang des ersten Empfangspfads 110 und ein Signal an dem Quadraturphasen-Ausgang des zweiten Empfangspfads 120 überlagern und der Codemultiplex-Basisbandstufe 140 an dem Quadraturphasen-Eingang zur Verfügung stellen.

Durch das beschrieben Konzept kann beispielsweise ein Mehrfrequenzbandempfänger auf Basis von Pfadüberlagerung mit Regelungsmöglichkeiten realisiert werden.

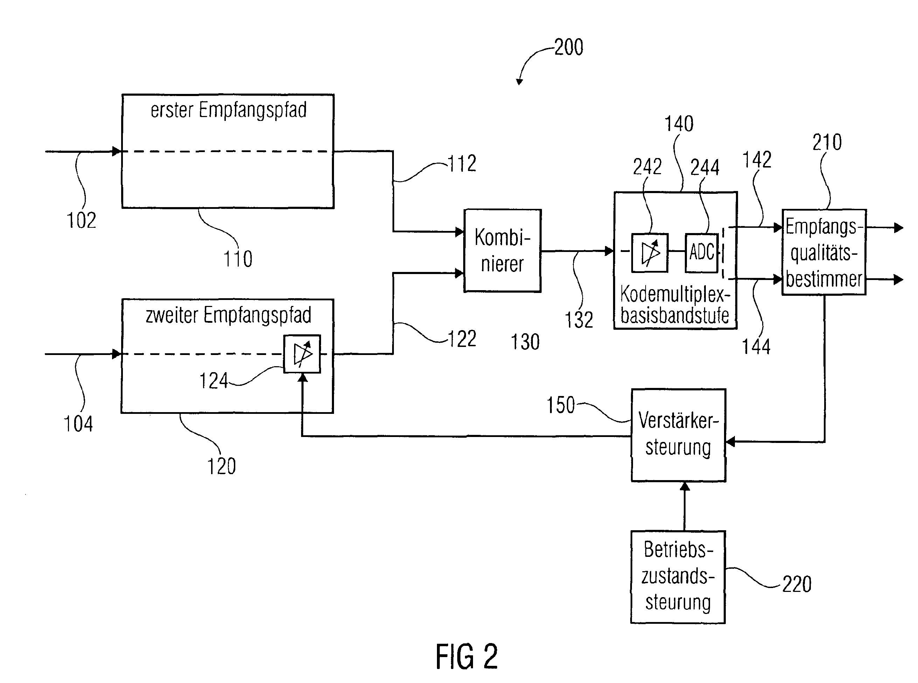

Fig. 2 zeigt ein Blockschaltbild eines Mehrfrequenzbandempfängers 200 entsprechend eines Ausführungsbeispiels gemäß der Erfindung. Der Aufbau des Mehrfrequenzbandempfängers 200 ist ähnlich dem Aufbau des in Fig. 1a gezeigten Mehrfrequenzbandempfängers, weist jedoch zusätzlich einen Empfangsqualitätsbestimmer 210 und eine Betriebszustandssteuerung 220 auf. Ferner umfasst die Codemultiplex-Basisbandstufe 140 einen Verstärker 242 mit variablem Verstärkungsfaktor verbunden mit einem Analog-Digital-Wandler 244 (ADC, analog-digital-converter). Der Empfangsqualitätsbestimmer 210 und die Betriebszustandssteuerung 220 sind mit der Verstärkersteuerung 150 verbunden und die Codemultiplex-Basisbandstufe 140 stellt das erste Basisband-Empfangssignal 142 und das zweite Basisband-Empfangssignal 144 dem Empfangsqualitätsbestimmer 210 zur Verfügung. Alternativ kann der Empfangsqualitätsbestimmer 210 auch Teil der Codemultiplex-Basisbandstufe 140 sein und die Basisband-Empfangssignale intern zur Verfügung gestellt bekommen. Genauso kann auch die Betriebszustandssteuerung 220 Teil der Code-multiplex-Basisbandstufe 140 sein.

Der Empfangsqualitätsbestimmer 210 kann beispielsweise die Empfangsqualität der Basisband-Empfangssignale bestimmen. Diese können dann zum Beispiel mit der variabel vorgebbaren, betriebszustandsabhängigen Mindestempfangsqualität verglichen werden und die Verstärkersteuerung 150 kann den Verstärkungsfaktor beispielsweise dynamisch anpassen, so dass eines der Basisband-Empfangssignale die variabel vorgebbare, betriebszustandsabhängige Mindestempfangsqualität aufweist. In anderen Worten, der Empfangsqualitätsbestimmer 210 kann eine Empfangsqualität des ersten Basisband-Empfangssignals 142 und/oder eine Empfangsqualität des zweiten Basisband-Empfangssignals 144 bestimmen. Die Verstärkersteuerung 150 kann dann basierend auf der bestimmten Empfangsqualität des ersten Basisband-Empfangssignals 142 oder der bestimmten Empfangsqualität des zweiten Basisband-Empfangssignals 144 den Verstärkungsfaktor des Verstärkers 124 steuern.

Alternativ kann in der einfachen Version eines Mehrfrequenzbandempfängers die Verstärkersteuerung 150 den Verstärkungsfaktor basierend auf einem Betriebszustand des Mehrfrequenzbandempfängers auf einen festen, vorgegebenen Wert einstellen. Dadurch wäre ein Empfangsqualitätsbestimmer nicht notwendig, jedoch könnte auf schwankende Empfangsbedingungen nicht reagiert werden und daher nicht die Gesamtleistungsfähigkeit des Mehrfrequenzbandempfängers erreicht werden, die mit Empfangsqualitätsbestimmer erreicht werden kann. Die fest vorgegebenen Werte können in diesem Beispiel so gewählt werden, dass die von einem Basisband-Empfangssignal erreichte variabel vorgebbare, betriebszustandsabhängige Mindestempfangsqualität einen großen Sicherheitsabstand zu einer minimal notwendigen Empfangsqualität für das Basisband-Empfangssignal hat, um Schwankungen der Empfangsbedingungen zulassen zu können.

Die Betriebszustandssteuerung 220 kann beispielsweise einen Betriebszustand des Mehrfrequenzbandempfängers feststellen und basierend darauf einen Wert der variabel vorgebbaren, betriebszustandsabhängigen Mindestempfangsqualität vorgeben. Die Betriebszustandssteuerung kann beispielsweise mit einer Anwenderschnittstelle verbunden sein oder interne Abläufe überwachen, um einen Betriebszustand des Mehrfrequenzbandempfängers festzustellen. In anderen Worten, die Betriebszustandssteuerung 220 kann einen Wert der variabel vorgebbaren, betriebszustandsabhängigen Mindestempfangsqualität basierend auf einem Betriebszustand des Mehrfrequenzbandempfängers vorgeben. Werte der variabel vorgebbaren, betriebszustandsabhängigen Mindestempfangsqualität können beispielsweise für verschiedene Betriebszustände in einem Speicher abgelegt sein. Alternativ können auch Werte für verschiedene Betriebszustände abgespeichert sein, von denen der Wert der variabel vorgebbaren, betriebszustandsabhängigen Mindestempfangsqualität in deterministischer Weise abhängt. Beispielsweise kann der Wert der variabel vorgebbaren, betriebszustandsabhängigen Mindestempfangsqualität eines Basisband-Empfangssignals um den gespeicherten konstanten Wert leicht schwanken, da bei wechselnden Empfangsbedingungen oder Umschalten zwischen Betriebszuständen die Verstärkersteuerung 150 eine gewisse Zeit braucht, um den Verstärkungsfaktor des Verstärkers 124 nachzuregeln.

In Fig. 2 wird das vom Kombinierer bereitgestellte überlagerte Codemultiplex-Signal 132 von einem Analog-Digital-Wandler 244 in ein digitales Signal umgewandelt. Der Analog-Digital-Wandler 244 ist ausgelegt, um Eingangssignale mit Spannungen zwischen einer minimalen Spannung und einer maximalen Spannung (z. B. 0 bis 1 Volt, 0 bis 5 Volt oder einem anderer Spannungsbereich) zu verarbeiten. An diesen Arbeitsbereich des Analog-Digital-Wandlers 244 sollte das überlagerte Codemultiplex-Signal 132 angepasst sein. Um den Bereich, in dem der Verstärker 124 mit variablen Verstärkungsfaktor des Empfangspfads verstärken darf (um nicht aus dem Arbeitsbereich des Analog-Digital-Wandlers herauszufallen), nicht einzuschränken, kann die Codemultiplex-Basisbandstufe 140 ebenfalls einen Verstärker 242 mit variablem Verstärkungsfaktor aufweisen. Der Verstärker 242 der Codemultiplex-Basisbandstufe 140 kann dann das überlagerte Codemultiplex-Signal 132 an den zulässigen Spannungsbereich oder Arbeitsbereich des Analog-Digital-Wandlers 244 anpassen. Mit anderen Worten, der Verstärker 242 mit variablem Verstärkungsfaktor der Codemultiplex-Basisbandstufe 140 kann das überlagerte Codemultiplex-Signal 132 verstärken (positiv oder negativ verstärken, also auch dämpfen) und dem Analog-Digital-Wandler 244 bereitstellen, so dass eine maximale Spannung des verstärkten überlagerten Codemultiplex-Signals an einen Arbeitsbereich des Analog-Digital-Wandlers 244 angepasst ist.

Der Empfangsqualitätsbestimmer 210, die Betriebszustandssteuerung 220 sowie der Verstärker 242 und der Analog-Digital-Wandler 244 der Codemultiplex-Basisbandstufe 140 können, wie in Fig. 2 gezeigt, alle gemeinsam in einem Mehrfrequenzbandempfänger integriert sein. Alternativ können Mehrfrequenzbandempfänger jedoch genauso nur ein oder zwei der beschriebenen Zusatzfunktionen aufweisen.

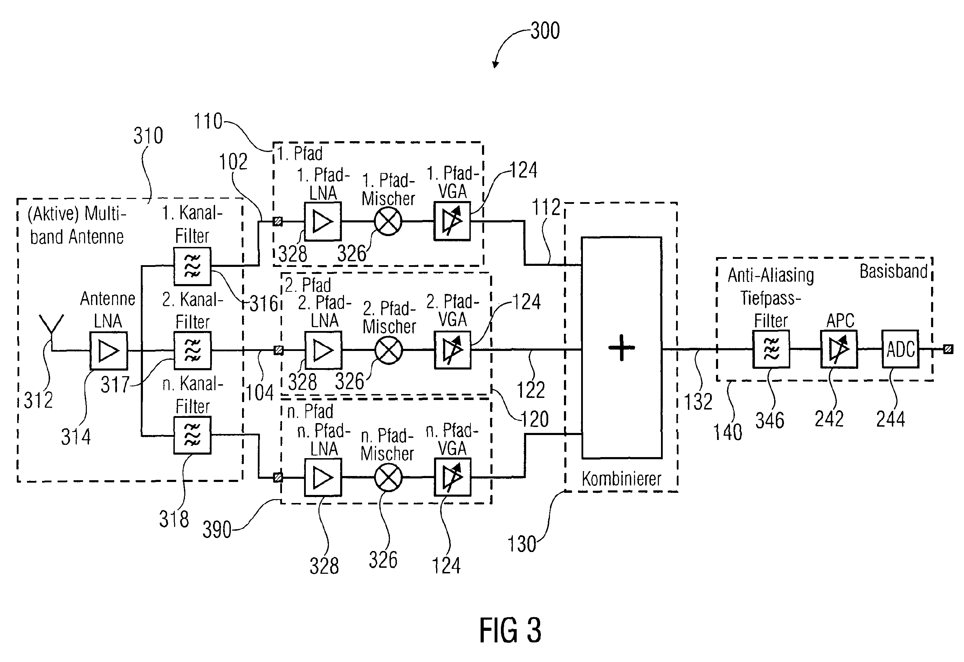

Bisher wurden Mehrfrequenzbandempfänger mit zwei Empfangspfaden beschrieben. Das erfindungsgemäße Konzept kann jedoch genauso auf eine beliebige Anzahl von Empfangspfaden erweitert werden. Fig. 3 zeigt dazu ein Blockschaltbild eines Mehrfrequenzbandempfängers 300 entsprechend eines Ausführungsbeispiels gemäß der Erfindung. Der Aufbau des Mehrfrequenzbandempfängers 300 ist ähnlich dem Aufbau des in Fig. 1a gezeigten Mehrfrequenzbandempfängers. Jedoch ist zusätzlich ein n-ter Empfangspfad 390 und eine Antennenstufe 310 oder (aktive) Multiband-Antenne gezeigt. Die Antennenstufe 310 ist mit den Empfangspfaden verbunden und die Empfangspfade sind mit dem Kombinierer 130 verbunden. Die Antennenstufe 310 weist eine Antenne, einen geräuscharmen Verstärker 314 der Antenne (LNA, Low Noise Amplifier) und für jeden Empfangspfad einen Kanalfilter 316, 317, 318 auf. Die Antenne 312 ist mit dem geräuscharmen Verstärker 314 der Antenne verbunden und der geräuscharme Verstärker 314 ist mit den Kanalfilter 316, 317, 318 verbunden. Der erste Kanalfilter 316 ist mit dem ersten Empfangspfad 110, der zweite Kanalfilter 317 ist mit dem zweiten Empfangspfad 120 und der n-te Kanalfilter 318 ist mit dem n-ten Empfangspfad 390 verbunden.

Jeder der Empfangspfade umfasst einen Verstärker 124 mit variablem Verstärkungsfaktor, der von einer in Fig. 3 nicht gezeigten Verstärkersteuerung gesteuert wird. Alternativ kann nur ein Teil der Empfangspfade einen Verstärker 124 mit variablem Verstärkungsfaktor aufweisen. Zum Beispiel kann der Verstärker 124 genau eines Empfangspfades entfallen, da eine relative Verstärkung der Signale in den anderen Empfangspfaden zu dem Empfangspfad ohne Verstärker beeinflusst werden kann.

Des Weiteren ist in Fig. 3 für jeden Empfangspfad ein geräuscharmer Verstärker 328 und ein Mischer 326 gezeigt. Der geräuscharme Verstärker jedes Pfads ist einerseits mit dem jeweiligen Kanalfilter der Antennenstufe 310 und andererseits mit dem zugehörigen Mischer 326 verbunden, der Mischer 326 ist mit dem jeweiligen Verstärker 124 mit variablem Verstärkungsfaktor verbunden und der Verstärker 124 mit variablem Verstärkungsfaktor ist mit dem Kombinierer 130 verbunden.

Ferner umfasst die Codemultiplex-Basisbandstufe 140, wie bereits in Fig. 2 gezeigt, einen Verstärker 242 mit variablem Verstärkungsfaktor und einen Analog-Digital-Wandler 244 sowie zusätzlich einen Anti-Aliasing-Tiefpassfilter 346. Der Anti-Aliasing-Tiefpassfilter 346 ist einerseits mit dem Kombinierer 130 und andererseits mit dem Verstärker 242 mit variablem Verstärkungsfaktor der Codemultiplex-Basisbandstufe 140 verbunden und der Verstärker 242 ist mit dem Analog-Digital-Wandler 244 verbunden.

Durch den n-ten Empfangspfad 390 soll angedeutet werden, dass der Mehrfrequenzbandempfänger 300 eine beliebige Anzahl (z. B. 3, 4, 5, 8, 10 oder allgemein N) Empfangspfade aufweisen kann. In anderen Worten, ein Mehrfrequenzbandempfänger kann einen Anzahl von N Empfangspfaden zum Empfangen von N Codemultiplex-Signalen aufweisen, wobei zumindest N-1 Empfangspfade der N Empfangspfade je einen Verstärker mit variablem Verstärkungsfaktor aufweisen. Dabei kann der Kombinierer 130 die Codemultiplex-Signale der N Empfangspfade überlagern und die Codemultiplex-Basisbandstufe 140 basierend auf dem überlagerten Codemultiplex-Signal N Basisband-Empfangssignale erhalten. Des Weiteren kann die Verstärkersteuerung den Verstärkungsfaktor jedes Verstärkers der zumindest N-1 Empfangspfade steuern, so dass zumindest eines der Basisband-Empfangssignale die variabel vorgebbare, betriebszustandsabhängige Mindestempfangsqualität aufweist.

Einige Ausführungsbeispiele gemäß der Erfindung beziehen sich auf einen Satellitennavigationsempfänger oder einen Mobilfunkempfänger, die einen Mehrfrequenzbandempfänger entsprechend des beschriebenen Konzepts umfassen.

Beispielsweise kann die Codemultiplex-Basisbandstufe in einem Satellitennavigationsempfänger die Basisband-Empfangssignale für eine Ionosphärenkorrektur verwenden. In anderen Worten kann die Codemultiplex-Basisbandstufe z. B. basierend auf dem ersten Basisband-Empfangssignal und dem zweiten Basisband-Empfangssignal eine Ionosphärenkorrektur des ersten Basisband-Empfangssignals und des zweiten Basisband-Empfangssignals durchführen.

In einem Mobilfunkempfänger kann die Codemultiplex-Basisbandstation durch das beschriebene Konzept beispielsweise die Empfangsqualität durch Verwendung von zumindest zwei unterschiedlichen Basisband-Empfangssignalen (aus verschiedenen Mobilfunkbändern) optimieren.

Für das Beispiel des Satellitennavigationsempfängers kann z. B. das erste Codemultiplex-Signal ein erstes Frequenzband eines Satellitensignals repräsentieren und das zweite Codemultiplex-Signal ein zweites Frequenzband des Satellitensignals repräsentieren. Die Frequenzbänder können dabei unterschiedliche Bandbreiten aufweisen. Zum Beispiel kann das erste Frequenzband eine größere Bandbreite als das zweite Frequenzband aufweisen. Dies ist beispielsweise bei den Galileo E1- (kleine Bandbreite) und E5- (große Bandbreite)-Bändern der Fall.

Daher kann es auch sein, dass das erste Basisband-Empfangssignal eine größere Bandbreite als das zweite Basisband-Empfangssignal aufweist. Bei Satellitennavigationsempfängern kann beispielsweise ein schmalbandiges Signal in einer Initialisierungsphase (Akquisition) verwendet werden, um die Navigationssatelliten zu finden, und in einer Lokalisierungsphase (Tracking) ein breitbandiges Signal verwendet werden, um eine genauere Lokalisierung zu ermöglichen. Dabei kann es auch wichtig sein, dass die ganze Zeit beide Signale in einer ausreichenden Qualität vorliegen. Zusätzlich kann es interessant sein, eines der beiden Signale in möglichst guter Qualität zu erhalten, wobei das andere Signal jedoch nicht unter eine minimale Empfangsqualität fallen soll. Beispielsweise könnte ein Verlust des schmalbandigen Signals in der Lokalisierungsphase eine spätere erneute Initialisierungsphase erfordern. Andererseits möchte man das breitbandige Signal in möglichst guter Qualität vorliegen haben, da die Lokalisierungsgenauigkeit proportional zur Empfangsqualität des breitbandigen Signals sein kann.

In anderen Worten, es kann von Interesse sein, dass die Verstärkersteuerung in einer Initialisierungsphase den Verstärkungsfaktor steuert, so dass das zweite Basisband-Empfangssignal (in diesem Beispiel das schmalbandige Signal) einen ersten Wert der variabel vorgebbaren, betriebszustandsabhängigen Empfangsqualität aufweist, und in einer Lokalisierungsphase den Verstärkungsfaktor steuert, so dass das zweite Basisband-Empfangssignal einen zweiten Wert der variabel vorgebbaren, betriebszustandsabhängigen Mindestempfangsqualität aufweist, wobei der erste Wert der variabel vorgebbaren, betriebszustandsabhängigen Mindestempfangsqualität höher ist als der zweite Wert der variabel vorgebbaren, betriebszustandsabhängige Mindestempfangsqualität, so dass eine Empfangsqualität des ersten Basisband-Empfangssignals (in diesem Beispiel das breitbandige Signal) in der Lokalisierungsphase höher ist als eine Empfangsqualität des ersten Basisband-Empfangssignals in der Initialisierungsphase.

So kann z. B. ein Empfangspfad heruntergedreht werden, so dass aber trotzdem noch eine Information aus diesem Pfad vorliegt. Zum Beispiel könnte in einem Galileo-Navigationssystem in einer Lokalisierungsphase (Tracking) das E1-Signal mit ursprünglich 45 dBHz mit -7dB gedämpft werden, wenn z. B. 38 dBHz im Basisband noch ausreicht, um das Signal mit minimaler Empfangsqualität zu erhalten. Dadurch könnte beispielsweise das E5-Signal entlastet werden. Würde das E1-Signal gar nicht mehr empfangen werden oder unter eine minimale Empfangsqualität fallen, könnte beispielsweise keine Ionosphärenkorrektur mehr durchgeführt werden. Zusätzlich könnte eine erneute Initialisierung (Akquisition) notwendig sein.

Eine Ionosphärenkorrektur kann beispielsweise für das Galileo-Satellitennavigationssystem anhand der folgenden Gleichungen durchgeführt werden:

$$\rho_{IF} = \frac{f_{E1}^2}{(f_{E1}^2 - f_{E5}^2)}\rho_{E1} - \frac{f_{E5}^2}{(f_{E1}^2 - f_{E5}^2)}\rho_{E5}$$

$$\rho_{IF} = 2.33\rho_{E1} - 1.33\rho_{E5}$$

$$\rho \approx T_C\sqrt{\frac{d}{4\,C/N_0\,T}}$$

Dabei bezeichnet $f_{E1}$ die Galileo E1 Frequenz von 1575,42 MHz, $f_{E5}$ die Galileo E5 Frequenz 1192 MHz, $\rho_{IF}$ die ionosphärenfreie Pseudoentfernungsmessung, $\rho_{E1}$ die Pseudoentfernungsmessung E1, $\rho_{E5}$ die Pseudoentfernungsmessung E5, $T_C$ die Chiprate (für E1=1,023 MHz, für E5= 10,23 MHz), d den diskriminator Abstand (z.B. 0,1), T die Integrationszeit (z.B. 100ms) und $C/N_0$ den Signal-Rausch-Abstand in Bezug auf 1 Hz Bandbreite (z.B. 40 dBHz).

Der Mehrfrequenzbandempfänger könnte auch beispielsweise einen dritten Empfangspfad zum Empfangen und Bearbeiten eines dritten Codemultiplex-Signals mit einem weiteren Verstärker mit variablem Verstärkungsfaktor aufweisen. Der Kombinierer könnte dann das erste bis dritte Codemultiplex-Signal überlagern und die Codemultiplex-Basisbandstufe könnte zusätzlich ein drittes Basisband-Empfangssignal erhalten und verwenden, wobei das dritte Basisband-Empfangssignal Daten des dritten Codemultiplex-Signals repräsentiert. Die Verstärkersteuerung kann dann den Verstärkungsfaktor des Verstärkers und den Verstärkungsfaktor des weiteren Verstärkers steuern, so dass zumindest zwei Basisband-Empfangssignale des ersten bis dritten Basisband-Empfangssignals eine variable vorgebbare, betriebszustandsabhängige Mindestempfangsqualität (kann für die zumindest zwei Basisband-Empfangssignale unterschiedliche oder gleiche Werte haben) aufweisen.

Dadurch könnten z. B. gleichzeitig drei unterschiedliche Satellitennavigationsbänder verarbeitet werden und die Empfangsqualitäten so optimiert werden, dass eine möglichst genaue Positionsbestimmung erfolgen kann. Alternativ kann beispielsweise das dritte Codemultiplex-Signal ein Mobilfunksignal repräsentieren. Dann können z.B. durch das beschriebene Konzept die Empfangsqualitäten der unterschiedlichen Basisband-Empfangssignale so optimiert werden, dass sowohl ein Mobilfunkempfang als auch eine möglichst genaue Positionsbestimmung erfolgen kann.

Dadurch kann auf eine variable Veränderung der Empfangssituation, z. B. ankommender oder abgehender Anruf im UMTS-Netz (universales Mobiltelekommunikationssystem, universal mobile telcommunication system) oder einem anderen Mobilfunknetz oder eine erwünschte genauere Positionsbestimmung, reagiert werden.

Zusätzlich kann es mit dem vorgeschlagenen Konzept möglich sein, durch hohe Verstärkung oder Dämpfung einzelner Pfade eine scheinbare alleinige Aktivierung dieser Pfade oder Deaktivierung anderer Pfade zu ermöglichen.

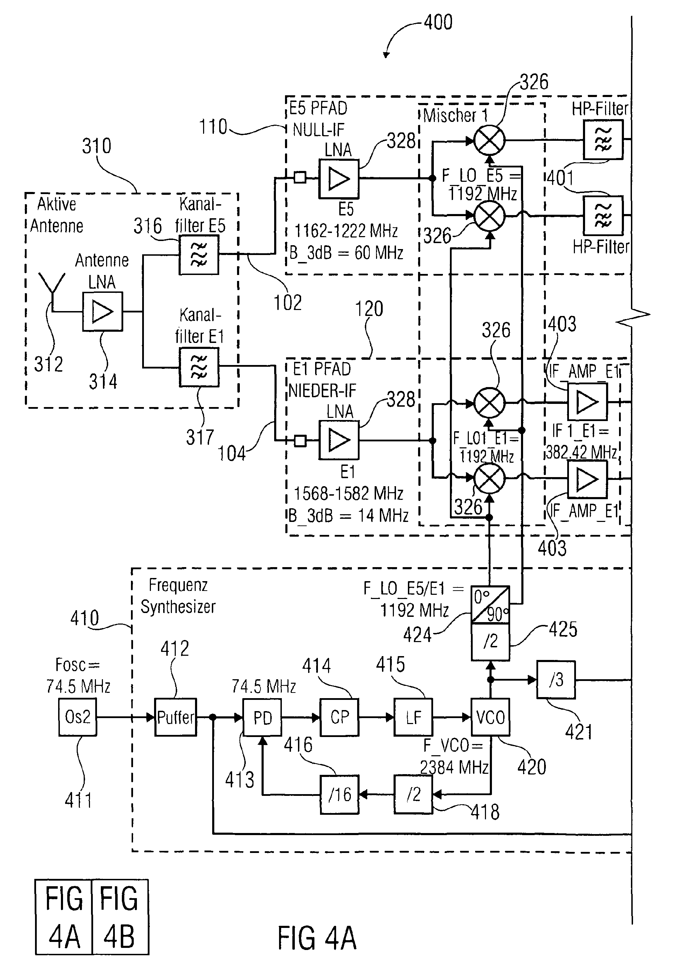

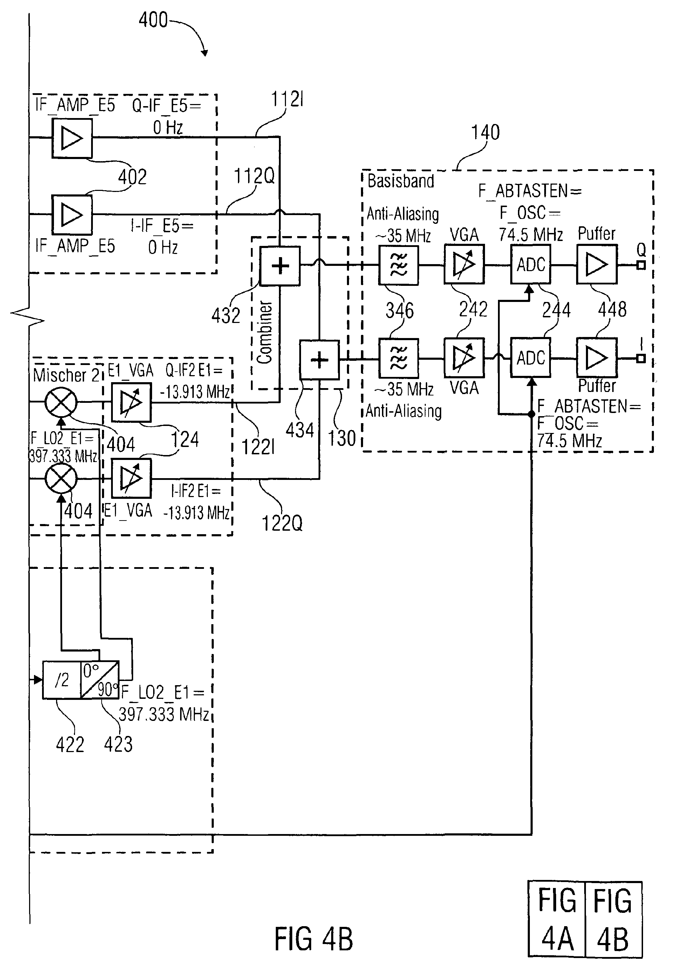

Fig. 4 zeigt ein Blockschaltbild eines Mehrfrequenzbandempfängers 400 entsprechend eines Ausführungsbeispiels gemäß der Erfindung. Der Aufbau des Mehrfrequenzbandempfängers 400 ähnelt dem in Fig. 3 gezeigten Mehrfrequenzbandempfänger, weist jedoch nur zwei Empfangspfade auf. Zusätzlich weist der Mehrfrequenzbandempfänger 400 eine Inphasen-Quadraturphasen-Architektur auf. Daher sind die Mischer 326, 404 als Inphasen-Quadraturphasen-Mischer ausgebildet. Des Weiteren kommen auch einige andere Elemente des Mehrfrequenzbandempfängers 400, wie beispielsweise der Verstärker 124 mit variablem Verstärkungsfaktor des zweiten Empfangspfads (E1-Pfad), der Anti-Aliasing-Filter 346, der Verstärker 242 mit variablem Verstärkungsfaktor der Codemultiplex-Basisbandstufe 140 und der Analog-Digital-Wandler 244 in zweifacher Ausführung für den Inphasen-Zweig und dem Quadraturphasen-Zweig vor.

Ferner umfasst der erste Empfangspfad (E5-Pfad) in Verarbeitungsrichtung nach dem Mischer 326 je einen Hochpassfilter 401, gefolgt von je einem Verstärker 402 in dem Inphasen-Zweig und dem Quadraturphasen-Zweig. Zusätzlich umfasst der zweite Empfangspfad 120 zwischen dem Mischer 326 und dem Verstärker 124 mit variablem Verstärkungsfaktor je einen Verstärker 403 in dem Inphasen-Zweig und dem Quadraturphasen-Zweig und einem Inphasen-Quadraturphasen-Mischer 404. Der Kombinierer 130 umfasst einen ersten Summierer 432 zum Überlagern der Inphasen-Signale und einen zweiten Summierer 434 zum Überlagern der Quadraturphasen-Signale.

Ferner weist der Mehrfrequenzbandempfänger 400 eine Oszillatorstufe 410 auf, die Oszillatorsignale für die Mischer 326, 404 der Empfangszweige und die Analog-Digital-Wandler 244 der Codemultiplex-Basisbandstufe 140 bereitstellt. Durch die Oszillatorstufe 410 (oder Frequenz-Synthesizer) können alle benötigten Oszillatorsignale zur Verfügung gestellt werden. Dafür umfasst die Oszillatorstufe 410 einen Referenzoszillator 411, dessen Referenzoszillatorsignal beispielsweise direkt oder nach einem Puffer 412 für die Ansteuerung der Analog-Digital-Wandler in der Basisbandstufe verwendet werden kann. Des Weiteren ist der Referenzoszillator mit dem Puffer 412 verbunden, von dem aus das Referenzoszillatorsignal an einem Phasendetektor 413, der Teil einer Phasenregelschleife eines spannungsgesteuerten Oszillators 420 ist, weitergeleitet wird. An einem zweiten Eingang des Phasendetektors 413 liegt das Oszillatorsignal des spannungsgesteuerten Oszillators 420 an, das zuvor durch 32 geteilt wurde (wie durch die beiden Teiler 416, 418 gezeigt). Nach dem Phasendetektor 413 sind eine Ladungspumpe (CP, charge pump) 414 und ein Schleifenfilter 415 angeordnet, die ein Signal liefern, mit dem der spannungsgesteuerte Oszillator 420 gesteuert wird. Der spannungsgesteuerte Oszillator 420 liefert ein Grundoszillatorsignal, das einerseits durch einen "geteilt durch zwei"-Teiler 425 ein erstes Lokaloszillatorsignal erzeugt, andererseits kann aus dem Grundoszillatorsignal in einem anderen Zweig die Grundoszillatorfrequenz durch 6 geteilt werden (wie durch die beiden Teiler 421, 422 gezeigt) und dadurch ein zweites Lokaloszillatorsignal erzeugt werden. Das erste Lokaloszillatorsignal kann dann den ersten Mischern 326 der Empfangspfade bereitgestellt werden und das zweite Lokaloszillatorsignal kann dem zweiten Mischer 404 des zweiten Empfangspfads 120 bereitgestellt werden. Beide Lokaloszillatorsignale können durch die Oszillatorstufe 410 für die Inphasen-Quadraturphasen-Mischer 326, 404 als Inphasen-Signal und als beispielsweise 90°-phasenverschobenes Signal (wie durch die beiden Phasenglieder 424, 423 gezeigt) zur Verfügung gestellt werden.

Alternativ können bei der dargestellten Oszillatorstufe die "geteilt durch zwei"-Teiler 425, 423, 418 eingespart werden, wenn ein spannungsgesteuerter Oszillator 420 mit entsprechend halbierter Grundfrequenz verwendet wird.

Das in Fig. 4 gezeigte Beispiel zeigt allgemein einen Mehrfrequenzbandempfänger, jedoch ist in der Figur zusätzlich eine Anwendung als Satellitennavigationsempfänger im Galileo-Satellitennavigationssystem durch Angabe von Bändern und Frequenzen angedeutet. Der gezeigte Empfänger kann jedoch genauso für andere Satellitennavigationssysteme oder generell andere Anwendungen, wie z. B. Mobilfunksysteme, verwendet werden, wenn die Komponenten des Mehrfrequenzbandempfängers an die entsprechenden Frequenzbänder angepasst werden.

Einige Ausführungsbeispiele gemäß der Erfindung beziehen sich auf eine Multi-Band GNSS-(globales Navigationssatellitensystem, global navigation satellite system)-Frontend-Architektur (Architektur der eingangsseitigen Komponente), die beispielsweise auch für integrierte Schaltungen geeignet ist.

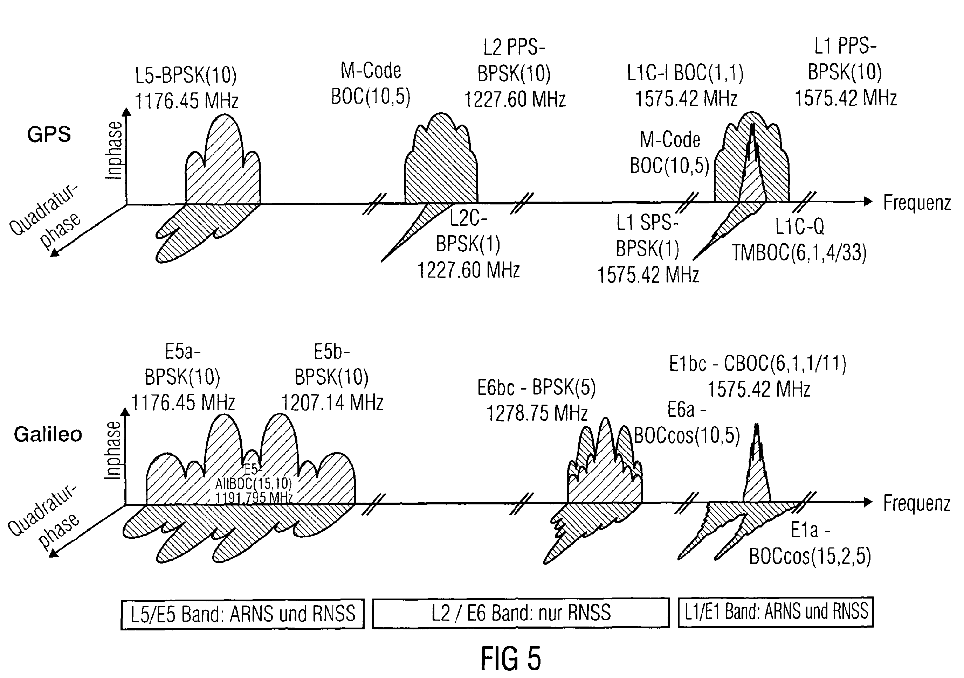

Für eine Frequenzbandwahl für einen Empfänger des hochentwickelten Massenmarkts kommen mehrere Frequenzbänder in Frage. Es gibt vier Frequenzbänder, bei denen Ziviles-GNSS-Signale geplant sind (siehe Fig. 5): L1 C/A, L1c/E1bc (GPS/Galileo); E6bc (Galileo); L2c (GPS); L5/E5[ab] (GPS/Galileo). Alle GNSS-Signale liegen in dem geschützten RNSS-Band (RNSS = Radio Navigation Satellite Services, Funknavigationssatellitendienste), jedoch liegen nur das L1/E1- und das L5/E5-Band in dem noch besser geschützten, zugewiesenen Spektrum für ARNS (Aeronautical Radio Navigation Services, Aeronautische Funknavigationsdienste). Die anderen zwei GNSS-Bänder, E6 und L2, die nur durch die RNSS geschützt sind, unterliegen Radar, militärischen Übertragungen und anderen potentiell starken Störern (siehe ""Galileo Open Service Signal in Space Interface Control Document (OS SIS ICD), Draft 1," techn. rep., European Space Agency/European GNSS Supervisory Authority, February 2008").

Zur schnellen Erfassung werden üblicherweise die relativ schmalbandigen Signale (GPS C/A mit BPSK(1)-Modulation oder/und Galileo E1bc mit BOC(1,1)-Modulation) auf L1 bzw. E1 verwendet. Die resultierende Doppler- und Chipverzögerungsschätzung kann anschließend für eine Hochleistungsnachführung mit den Breitbandsignalen L1/E1 MBOC(6,1,1/11), L5/E5a BPSK(10), E5b BPSK(10) oder den ganzen E5 AltBOC(15,10)-Signalen verwendet werden. Gemäß "J.-M. Sleewaegen, W. De Wilde, and M. Hollreiser, "Gallileo AltBOCReceiver," in Proc. Of ENC-GNSS 2004, Rotterdam, 2004" können die Standardabweichung des Codemessrauschens und der Mehrwege-Codefehler vor allem bei Galileo E5 AltBOC(15,10) sehr gering sein.

Schließlich sind das Band Galileo E5 (einschließlich des GPS L5, Galileo E5a und E5b) und die Bänder GPS/Galileo L1/E1 aus folgenden Gründen für z.B. einen Mehrband-GNSS-Empfänger des hochentwickelten Massenmarktes geeignet und können für diesen ausgewählt werden:

Es werden keine oder nur hinreichend bekannte Störer, z.B. DME und TACAN, die im E5-Band vorliegen, erwartet. Glücklicherweise können diese pulsierten Störungen mit Pulsaustaststrategien relativ gut abgemildert werden, wie z.B. bei "G. X. Gao, "DME/TACAN Interference and ist Mitigation in L5/E5 Bands," in ION GNSS 20th International Technical Meeting of the Satellite Division, 25 - 28, September 2007, Fort Worth, TX, 2007" erörtert wird.

Die Signale in den ausgewählten Bändern eignen sich für eine schnelle Erfassung mit den Schmalband-L1/E1-Signalen und für die höchste Nachführungsgenauigkeit unter Verwendung der Breitband-L5/E5-Signale.

Überdies erfordern GNSS-Anwendungen, die auf Sicherheit und den Schutz menschlichen Lebens bezogen sind, ein Integritätssignal wie z.B. dasjenige, das über die Bänder Galileo E1b und E5b gesendet wird.

Alle empfangenen GNSS-Signale sind Codemultiplexverfahren-basierte Signale (CDMA-Signale) mit einem negativen Signal/Rausch-Verhältnis (SNR, signal to noise ratio) vor der Korrelation. Wie es durch Simulationsergebnisse nachfolgend gezeigt wird, können die zwei Pfade miteinander kombiniert werden mit annehmbarer Signalverschlechterung aufgrund der Überlagerung. Der Basisbandteil, der für die überlappten L1/E1- und L5/E5-Bänder gemeinsam ist, besteht aus zwei Anti-Aliasing-Tiefpassfiltern, einer automatischen Leistungssteuerung, die mit zwei Verstärkern mit variabler Verstärkung (VGA, variable gain amplifier) und zwei Analog/Digital-Wandlern realisiert ist, für Inphase- und Quadratur-Verarbeitung. Dies kann die erforderliche Chipfläche, die erforderlichen Pins (Anschlüsse) und den erforderlichen Leistungsverbrauch beträchtlich reduzieren.

Um die SNR-Verschlechterung (signal-to-noise ratio, Signal zu Rausch Verhältnis) aufgrund von Überlagerung beider Wege zu minimieren, müssen die Leistungspegel dieser Wege möglichst korrekt eingestellt sein. Wie gezeigt werden kann, wenn beide Pfade gleichermaßen verstärkt sind, erhöht die Kombination das Grundrauschen und verringert daher z.B. das SNR von E1 um 3 dB. Gleichzeitig wird das Grundrauschen des E5-Signals nur um etwa 0,9 dB erhöht, aufgrund der geringeren gefilterten E1 -Bandbreite. Das E5b-Signal, das bei +15,55 MHz IF angeordnet ist, wird überhaupt nicht beeinträchtigt, falls das E1-Filter eine ausreichende Sperrbereichsdämpfung aufweist.

Ein zusätzlicher Verstärker mit variabler Verstärkung wird in zumindest einem Pfad benötigt, um in der Lage zu sein, die Grundrauschleistung zu steuern und somit die Verschlechterung zwischen den L1/E1-, E5- und L5/E5a-Signalen zu steuern. Eine Grundrauschkalibrierung kann anfangs durchgeführt werden oder jedes Mal, wenn der digitale Steueralgorithmus dies erfordert. Ein mögliches Kalibrierungsverfahren kann durch unabhängiges Messen der Rauschvarianz jedes Pfads in dem digitalen Bereich implementiert werden, wenn der andere ausgeschaltet ist. Wenn beide Varianzen bekannt sind, kann die Verstärkungskorrektur entsprechend eingestellt werden.

Wenn nur ein Signalpfad benötigt wird, z. B. der L1/E1-GPS/Galileo während der Erfassungsphase oder Initialisierungsphase (acquisition phase), kann der andere Pfad abgeschaltet (oder scheinbar abgeschaltet, indem der andere Pfad sehr stark verstärkt wird) werden. Die SNR-Verschlechterung aufgrund der Zunahme des Grundrauschens und des Leistungsverbrauchs des ungenutzten Pfades wird eliminiert. Dies hilft in verschlechterten Signalumgebungen und kann auch als ein Energiesparmodus angesehen werden. In der nachfolgenden Verfolgungsphase oder Lokalisierungsphase (tracking phase), wenn beide Bänder verwendet werden, kann die SNR-Verschlechterung zwischen L1/E1 und E5/E5a/L5 mit einem zusätzlichen VGA gesteuert werden (z. B. dem E1_VGA in Fig. 4).

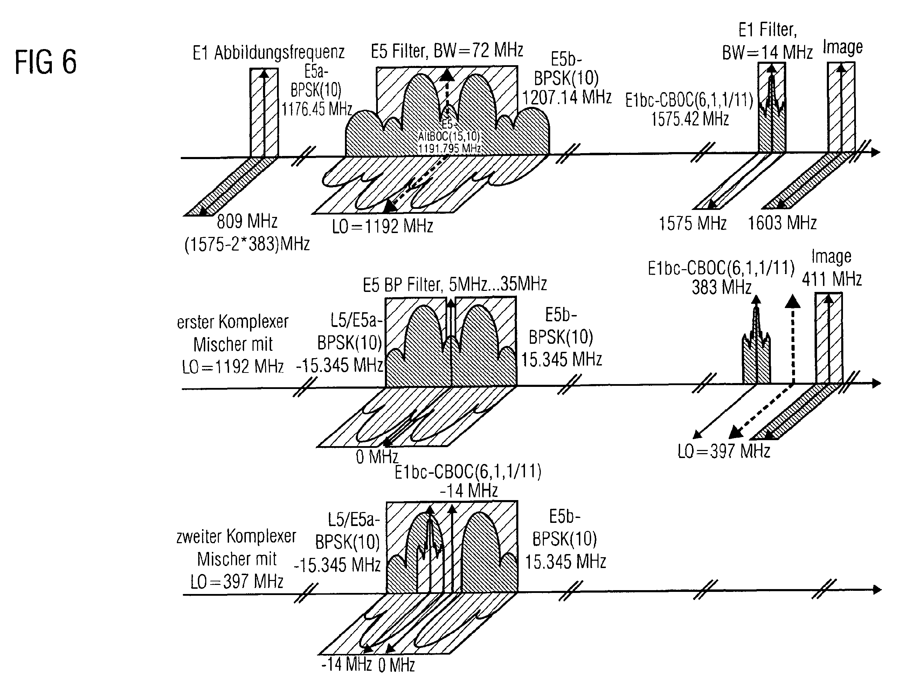

Fig. 6 zeigt ein Beispiel für die Signalabwärtswandlung und deren Zwischenfrequenzen für einen Mehrfrequenzbandempfänger, wie er z.B. in Fig. 4 gezeigt ist. Zusätzlich zeigt die nachfolgende Tabelle eine Übersicht über GNSS-Signale empfangen mit deren entsprechenden Bandweiten und Zwischenfrequenzen (IF).

| GNSS-Signal | TrägerFrequenz [MHz] | Modulation | RX-Bandbreite [MHz] | IF [MHz] |
|---|---|---|---|---|
| GPS **L**1 C/A | 1575,42 | BPSK(1) | 14 | -13,913 |
| GPS **L**1c | 1575,42 | TMBOC(6,1,4/33) | 14 | -13,913 |
| Galileo E1bc | 1575,42 | CBOC(6,1,1/11) | 14 | -13,913 |
| Galileo E5 | 1191,795 | AltBOC(15,10) | 70 | -0,205 |
| Galileo E5a | 1176,45 | BPSK(10) | 32 | -15,55 |
| GPS **L**5 | 1176,45 | BPSK(10) | 32 | -15,55 |
| Galileo E5b | 1207,14 | BPSK(10) | 32 | +15,14 |

Dabei gibt die erste Spalte der Tabelle die Namen von verschiedenen GNSS-Signalen, die zweite Spalte die Trägerfrequenzen (Carrier frequency) der GNSS-Signale in MHz, die dritte Spalte die Modulation der GNSS-Signale, die vierte Spalte Empfangsbandbreiten (RX bandwidth) der GNSS-Signale in MHz und die fünfte Spalte resultierende Zwischenfrequenzen der GNSS-Signale an.

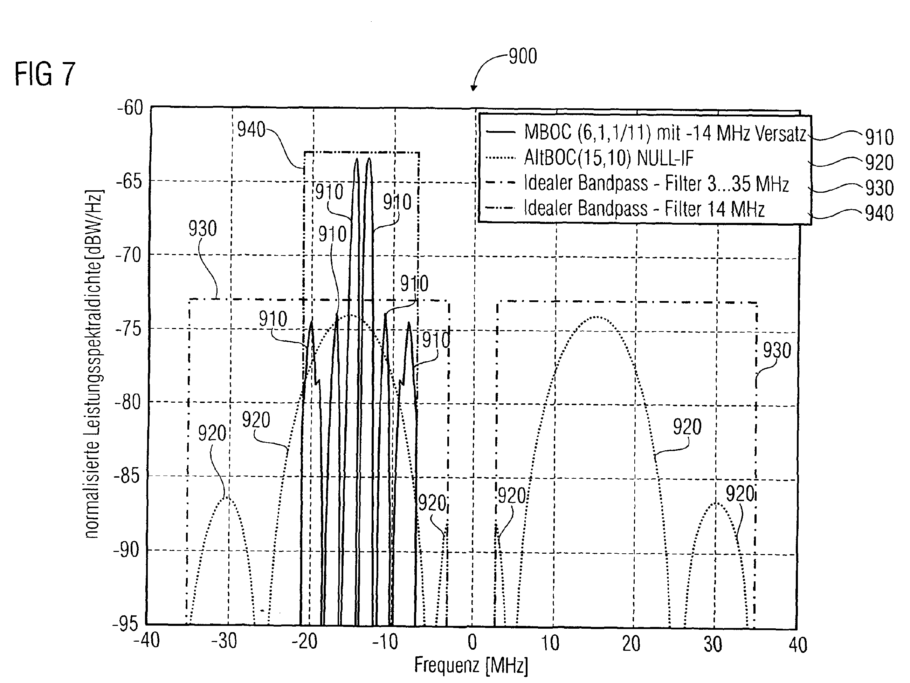

Fig. 7 zeigt eine schematische Darstellung 900 von gefilterten Basisbandsignalen für MBOC (6, 1, 1/11) mit -14 MHz Versatz 910 und für AltBOC (15, 10, 0-IF 920), wobei zusätzlich das Verhalten eines idealen Bandpassfilters von 3-35 MHz 930 und eines idealen Bandpassfilters mit 14 MHz 940 angedeutet ist. Dabei ist die normalisierte Leistungsspektraldichte in dBW/Hz bei variierender Frequenz in MHz gezeigt.

Der spektrale Separationskoeffizient (SSC, spectral separation coefficient) kann verwendet werden, um die Störung zwischen zwei Signalen zu quantifizieren. Der SSC misst, wie orthogonal zwei Signale sind. Falls die PSDs nicht überlappen, z. B. durch entfernte Frequenzbänder getrennt sind, nähert sich der SSC Null an. Die PSDs von Signalen BOCsin, MBOC und AltBOC sind in Gleichungen 2, 3 und 1 gegeben. Dieselben sind alle über eine unendliche Bandbreite auf Eins normiert. Gemäß "E. D. Kaplan and C. J. Hegarty, Understanding GPS: Principles and Application, Second Edition, Artech House, 2006" kann der SSC z.B. berechnet werden mit:

$$\text{SSC} = \int_{-\infty}^{\infty} S_s(f)\, S_i(f)\, df$$

$$(4)$$

Für den vorliegenden Fall wird diese Gleichung modifiziert und mit einer Frequenzverschiebung, um die unterschiedlichen Basisband-IFs zu berücksichtigen, und mit Filtern erweitert. Es werden die Filtercharakteristika des 3MHz-Hochpass- und 35MHz-Tiefpassfilters ($|H_s|^2$) für E5-AltBOC und die 14MHz-Bandpassfiltercharakteristik ($|H_i|^2$) für das E1-MBOC-Signal verwendet. Somit kann der SSC wie folgt berechnet werden:

$$\text{SSC} = \int_{-\infty}^{\infty} |H_s|^2 S_s(f + f_{IF_s})\, |H_i|^2 S_i(f + f_{IF_i})\, df$$

$$(5)$$

Die Ergebnisse von Gleichung 5 sind der nachfolgenden Tabelle für unterschiedliche Signalüberlagerungskombinationen gezeigt. Die Tabelle beinhaltet spektrale Separationskoeffizienten (SSC) für unterschiedliche Signalsuperpositionen in dB/Hz.

| | MBOC | MBOC$_{\text{gefiltert}}$ | MBOC$_{\text{IF}}$ | MBOC$_{\text{gefiltert,IF}}$ | AltBOC | AltBOC$_{\text{gefiltert}}$ |
|---|---|---|---|---|---|---|
| MBOC | -65,66 | -65,66 | -86,90 | -87,55 | -84,04 | -90,54 |
| MBOC$_{\text{gefiltert}}$ | - | -65,66 | -87,55 | -88,29 | -84,59 | -93,67 |
| MBOC$_{\text{IF}}$ | - | - | -65,66 | -65,66 | -74,91 | -74,91 |
| MBOC$_{\text{gefiltert,IF}}$ | - | - | - | -65,66 | -74,93 | -74,93 |
| AltBOC | - | - | - | - | -76,51 | -76,59 |
| AltBOC$_{\text{gefiltert}}$ | - | - | - | - | - | -76,59 |

MBOC oder AltBOC sind die unbegrenzten PSDs. Die gefilterten Versionen (MBOC$_{\text{filtered}}$, AltBOC$_{\text{filtered}}$) umfassen ein 7MHz-Tiefpass für MBOC und ein 3- bis 35MHz-Bandbass für AltBOC. Die IF-Indizes geben die Verschiebung der MBOC-PSD zu der IF-Frequenz von -14 MHz an. Der SSC von MBOCg$_{\text{efiltert,IF}}$ mit AltBOC$_{\text{gefiltert}}$ beträgt -74,93 dB/Hz. Verglichen mit den Eigenstörungen von AltBOC$_{\text{gefiltert}}$ mit -76,59 dB/Hz ist die Überlagerung lediglich etwas schlechter. Die Eigenstörung von MBOC$_{\text{gefiltert}}$ beträgt -65,66 dB/Hz, so dass der Überlagerungs-SSC um 9,27 dB besser ist. Der niedrigste spektrale Separationskoeffizient ist für AltBOC$_{\text{gefiltert}}$ und MBOC$_{\text{gefiltert}}$ bei -93,67 dB/Hz gegeben, weil bei dieser Konfiguration die PSDs kaum überlappen. Also wäre dies die erwünschteste Kombination, aber ein derartiges IF-Konzept ist nicht möglich, ohne einen viel komplizierteren Frequenzsynthesizer als denjenigen, der beispielsweise in Fig. 4 vorgeschlagen wird, zu verwenden.

Unter Verwendung dieser SSC-Werte kann das wirksame $C/N_0$ gemäß "E. D. Kaplan and C. J. Hegarty, Understanding GPS: Principles and Application, Second Edition, Artech House, 2006" z.B. wie folgt berechnet werden:

$$\frac{C_s}{N_{0\,\text{eff}}} = \frac{C_s}{N_0} \frac{\int |H_s|^2 \, S_s(f)\, df}{\int |H_s|^2 \, S_s(f)\, df + \frac{C_i}{N_0}\,\text{SSC}}$$

$$(6)$$

Nun kann die SNR-Verschlechterung bestimmt werden zu:

$$\text{SNR}_{\text{loss}} = \frac{C_s/N_0}{C_s/N_{0\,\text{eff}}} = 1 + \frac{C_i}{N_0} \frac{\text{SSC}}{\int |H_s|^2 \, S_s(f)\, df}$$

$$(7)$$

In diesem Fall ist bei einem SSC von etwa -75 dB/Hz und einem realistischem $C_i/N_0$ Betriebsbereich zwischen 20 und 45 dBHz, die Überlagerungswirkung zwischen den Signalen vernachlässigbar (unter 0,01 dB SNR-Verlust). Aber dieser SNR-Überlagerungsverlust berücksichtigt die Auswirkung des zusätzlichen Rauschens nicht, das durch die Kombination zweier Pfade (Empfangspfade) eingebracht wird.

Die Rauschbandbreite innerhalb von E5 beträgt 64 MHz (-35 bis -3 MHz und +3 bis +35 MHz). Die E1-Rauschbandbreite beträgt 14 MHz (-7 bis +7 MHz). Der Kombinierer addiert nicht nur die Signale, sondern auch das Grundrauschen derselben. Das erhöhte Grundrauschen (Superpositionsrauschen oder Überlagerungsrauschen) für E5 beträgt:

$$\Delta_{E5} = 10 \log_{10} \left( \frac{BW_{E5} + BW_{E1} \cdot \text{VGA}_{E1}}{BW_{E5}} \right)$$

$$(8)$$

und das Überlagerungsrauschen für E1 beträgt:

$$\Delta_{E1} = 10 \log_{10} \left( \frac{BW_{E5}|H_{14\,\text{MHz}}|^2 + BW_{E1} \cdot \text{VGA}_{E1}}{BW_{E1} \cdot \text{VGA}_{E1}} \right)$$

$$(9)$$

Unter der Annahme, dass das SNR und die Verstärkung für den E1- und den E5-Weg die gleichen sind und kein E1-VGA vorhanden ist ($\text{VGA}_{E1}$ = 0 dB, siehe auch Fig. 2), bekommt das gefilterte E1-Signal mit 14 MHz Bandbreite das ganze Rauschen von dem E5-Weg innerhalb der Bandbreite desselben. Die SNR-Verschlechterung von 3,01 dB für das E1-Signal ist offensichtlich, da das Grundrauschen innerhalb der E1-Bandbreite verdoppelt ist. Das Rauschen innerhalb des breitbandigen E1-Signals ist lediglich an dem E5a-Signal erhöht, wo das E1-IF-Signal überlappt. Daher ist die SNR-Verschlechterung von 0,86 dB für das komplette E5-Signal viel niedriger. Die Verschlechterung für das GPS-L5- bzw. das Galileo-E5a-Signal beträgt innerhalb von -35 bis -3 MHz Bandbreite 1,58 dB. Es gibt gar keine Überlagerungsrauschverschlechterung für das Galileo-E5b-Signal.

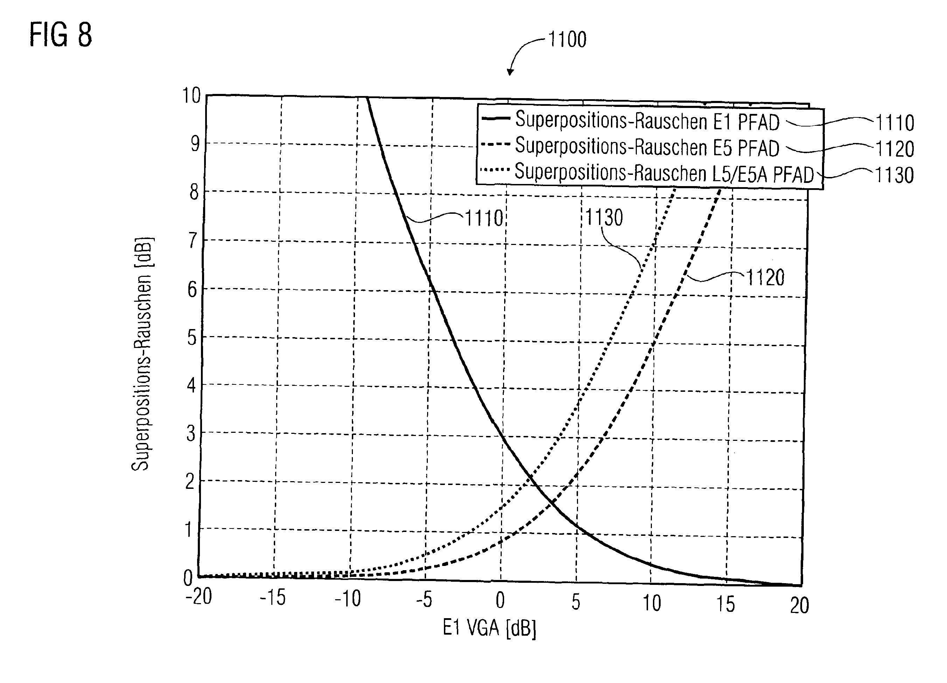

Fig. 8 zeigt eine schematische Darstellung 1100 ein durch den Verstärker mit variablem Verstärkungsfaktor einstellbares Superpositionsrauschen für den E1-Pfad 1110, den E5-Pfad 1120 und den L5/E5a-Pfad 1130. Dabei ist das Superpositionsrauschen in dB für unterschiedliche Verstärkung des Verstärkers mit variablem Verstärkungsfaktor in dB gezeigt.

Mit der Hilfe eines Verstärkers mit variabler Verstärkung bei einem oder bei beiden der Signalwege kann das Superpositionsrauschen oder Überlagerungsrauschen eingestellt werden. Dies ist in Fig. 8 für einen E1-VGA gezeigt, der in dem E1-Weg vorhanden ist, wie dies in Fig. 4 gezeigt ist. Wenn beide Wege simultan verwendet werden, beträgt der minimale Überlagerungsrauschverlust für das E1- und das E5-Signale 1,67 dB, wobei der E1-VGA auf 3,3 dB Verstärkung gesetzt ist. Der minimale Überlagerungsrauschverlust für das E1- und das L5/E5a-Signal beträgt 2,21 dB, wobei der E1-VGA auf 1,8 dB Verstärkung gesetzt ist.

Es wurde gezeigt, dass die SNR-Verschlechterung durch die Überlagerung verglichen mit den Einsparungen, die durch diese Art von Empfängerarchitektur ermöglicht werden, gering ist. Zudem kann die Überlagerungsverschlechterung unter Verwendung eines Elements mit variabler Verstärkung in zumindest einem Signalpfad (Empfangspfad) gesteuert werden.

Das beschriebene Konzept ermöglicht beispielsweise eine neuartige Mehrband-Front-End-Architektur für die neuen Breitband-GNSS-Signale vor. Sie ermöglicht den gleichzeitigen Empfang von sowohl L1/E1- als auch L5/E5-GPS/Galileo-Bändern mit großer Bandbreite. Die beschriebene Topologie (z.B. Fig. 4) eignet sich für eine Integrierte-Schaltung-Implementierung. Ein Null-IF- und ein Niedrige-IF-Pfad (IF = intermediate frequency, Zwischenfrequenz) werden miteinander kombiniert, was den Vorteil hat, dass lediglich eine Basisbandschaltungsanordnung benötigt wird und dass die Anzahl erforderlicher Komponenten, die Chipfläche und der Leistungsverbrauch beträchtlich verringert werden. Außerdem wird lediglich ein Frequenzsynthesizer benötigt, um alle inneren Frequenzen zu erzeugen.

Die vorgeschlagene Empfängerarchitektur ermöglicht einen Mehrfrequenzbandempfänger für den hochentwickelten Massenmarkt, z.B. den Automobilmarkt, zu schaffen, auf dem professionelle High-End-Empfänger zu kostspielig und zu groß wären und zu viel Leistung verbrauchen würden. Jedoch können die oben aufgeführten Vorteile große Verbesserungen mit sich bringen oder sogar einige neue Anwendungen ermöglichen.

Das beschriebene Konzept schlägt eine neue Front-End-Architektur mit gleichzeitigem Mehrbandempfang mit einer gemeinsamen Nutzung von vielen Empfängerblöcke in der Architektur vor. Diese Architektur ist somit in Bezug auf Kosten, Größe und Leistungsverbrauch bei gleichzeitigem Empfang der Breitbandbänder Galileo E5, E1 und GPS L5, L1 effizient und dabei für integrierte Schaltungslösungen geeignet.

Bei CDMA-Systemen liegt prinzipbedingt ein negatives Signal-Rausch-Verhältnis vor. Das Nutzsignal wird erst durch Korrelation mit einem Replika der Spreizfolge im Empfänger wieder verwendbar. Deshalb können verschiedene CDMA-Signale, z.B. aus verschiedenen Frequenzbändern, im Empfänger überlagert werden, womit man viel Aufwand sparen kann. Die Überlagerung führt allerdings dazu, dass sich das Gesamtrauschen erhöht. Mit Hilfe von einstellbaren Verstärkern in mindestens einem Empfangspfad vor der Überlagerung kann dieses zusätzliche Überlagerungsrauschen stufenlos je nach Anforderung der Empfangssituation angepasst werden.

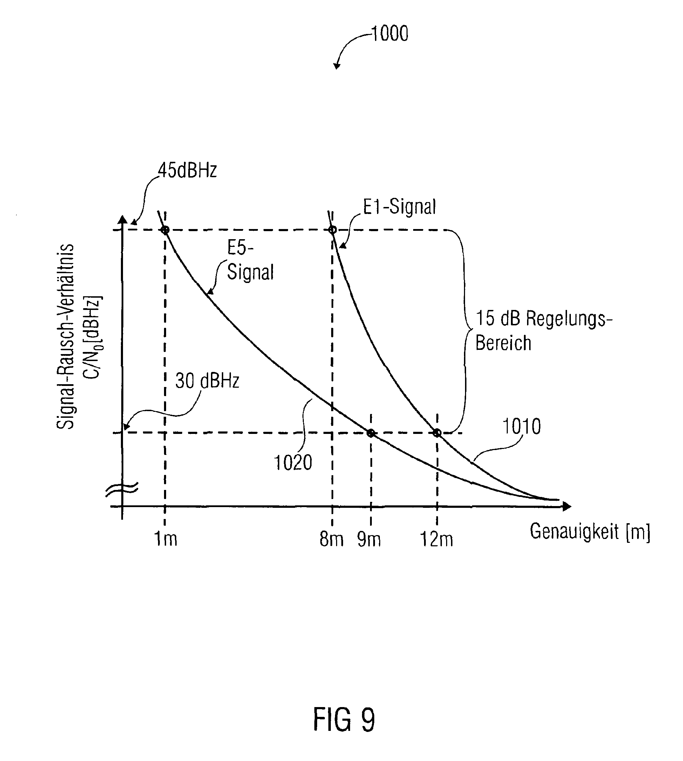

Fig. 9 zeigt ein Beispiel für eine mögliche Abhängigkeit 1000 der erreichbaren Genauigkeit einer Positionsbestimmung vom Signal-zu-Rausch-Verhältnis $C/N_0$. Dabei ist durch die beiden Kurve das Verhalten 1010 des E1-Signals und das Verhalten 1020 des E5-Signals gezeigt. Zusätzlich ist für zwei unterschiedliche Signal-zu-Rausch-Verhältnisse, die beispielsweise einem 15 dB Regelungsbereich des Mehrfrequenzbandempfängers entsprechen, die erreichbare Genauigkeit der Positionsbestimmung angedeutet.

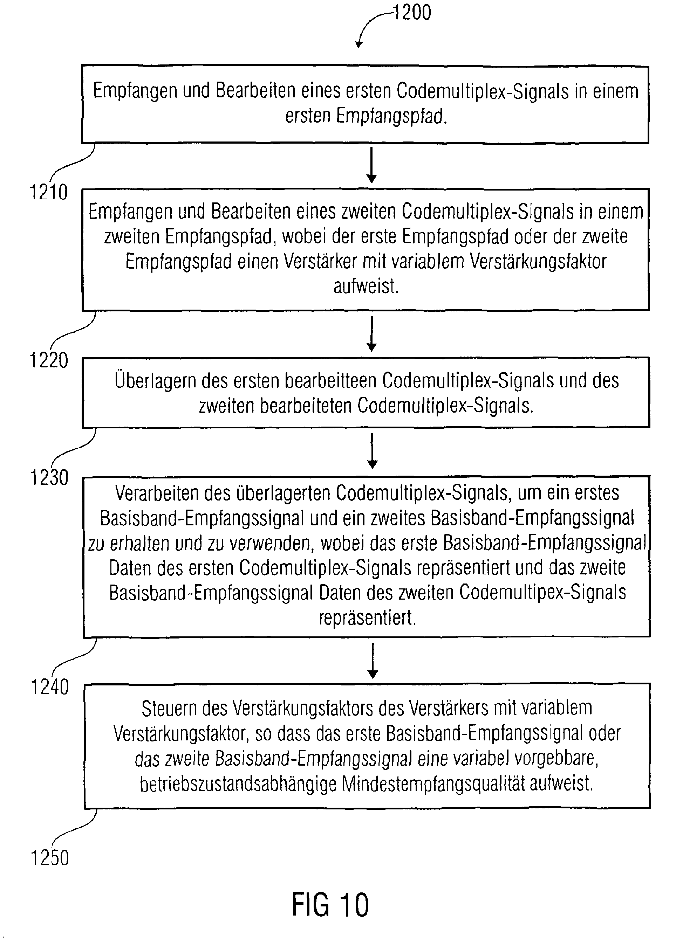

Fig. 10 zeigt ein Flussdiagramm eines Verfahrens 1200 zum Empfangen von Codemultiplex-Signalen mit einem Mehrfrequenzbandempfänger entsprechend eines Ausführungsbeispiels gemäß der Erfindung. Das Verfahren 1200 umfasst ein Empfangen und Bearbeiten 1210 eines ersten Codemultiplex-Signals in einem ersten Empfangspfad und ein Empfangen und Bearbeiten 1220 eines zweiten Codemultiplex-Signals in einem zweiten Empfangspfad. Dabei weist der erste Empfangspfad oder der zweite Empfangspfad einen Verstärker mit variablem Verstärkungsfaktor auf. Ferner umfasst das Verfahren 1200 ein Überlagern 1230 des ersten bearbeiten Codemultiplex-Signals und des zweiten bearbeiteten Codemultiplex-Signals sowie ein Verarbeiten 1240 des überlagerten Codemultiplex-Signals, um ein erstes Basisband-Empfangssignal und ein zweites Basisband-Empfangssignal zu erhalten und zu verwenden. Dabei repräsentiert das erste Basisband-Empfangssignal Daten des ersten Codemultiplex-Signals und das zweite Basisband-Empfangssignal Daten des zweiten Codemultiplex-Signals. Des Weiteren umfasst das Verfahren 1200 ein Steuern 1250 des Verstärkungsfaktors des Verstärkers mit variablem Verstärkungsfaktor, so dass das erste Basisband-Empfangssignal oder das zweite Basisband-Empfangssignal eine variabel vorgebbare, betriebszustandsabhängige Mindestempfangsqualität aufweist.

Im Folgenden werden einige Aspekte der Erfindung genauer beschrieben. Dies erfolgt beispielsweise anhand einer Analyse von Verschlechterungseffekten von Überlagerungssignalen, wie z.B. Überlagerungsverlust und Rauschen aufgrund der Wegkombination.

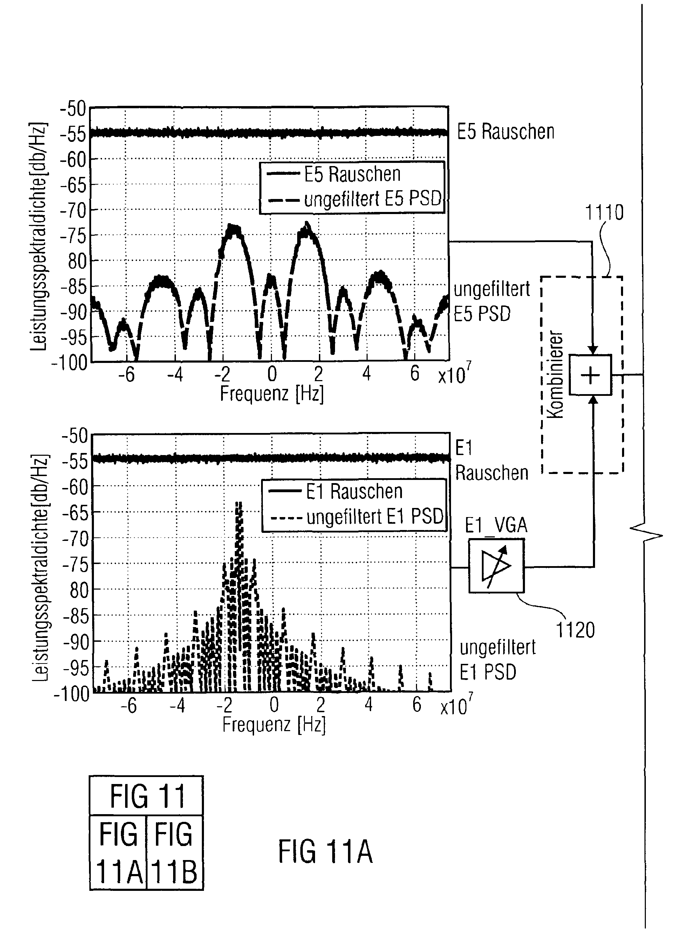

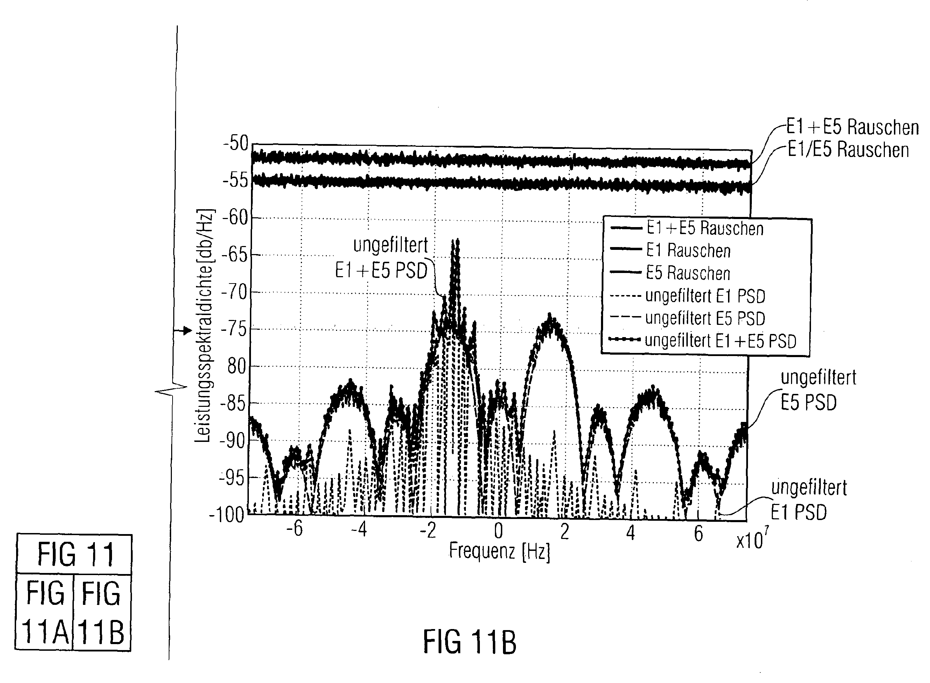

Alle empfangenen GNSS-Signale sind Codemultiplexzugriff-(CDMA; CDMA = Code Division Multiple Access) basierte Signale mit einem negativen Signal-Rausch-Verhältnis (SNR; SNR = Signal-to-Noise-Ratio) vor der Korrelation, wie es in Fig. 11 gezeigt ist. Der Kombinierer 1110 addiert nicht nur die Signale, sondern auch ihr Grundrauschen. In "A. Ruegamer, U. Santiago, and G. Rohmer, "Multi-band GNSS Front-end Architecture Suitable for Integrated Circuits," in Proceedings of the 2010 International Technical Meeting of The Institute of Navigation - ION ITM 2010, January 25 - 27, 2010, San Diego, CA." wurde mit Argumenten basierend auf dem spektralen Trennungskoeffizienten (SSC; SSC = Spectral Separation Coefficient) gezeigt, dass der Überlagerungsverlust aufgrund der Kombination zwischen den zwei zerstreuten Spektrumsignalen vernachlässigbar ist, aber der Einfluss des zusätzlichen Rauschens, das durch die Kombination von zwei Wegen eingeführt wird, zu beobachten ist. Die Kombination erhöht das Grundrauschen und verringert daher das SNR oder die Träger/Empfänger-Rauschdichte ($C/N_O$).

Das erhöhte Grundrauschen (Überlagerungsrauschen) hängt ab von der bestimmten Signalrauschbandbreite (BW) - für E5 ist dieselbe:

$$\Delta_{E5} = 10 \log_{10} \left( 1 + \text{VGA}_{E1} \cdot \frac{BW_{E1}}{BW_{E5}} \right)$$

$$(10)$$

und das Überlagerungsrauschen für E1 ist

$$\Delta_{E1} = 10 \log_{10} \left( 1 + \frac{BW_{E5}|H_{E1\,\text{Filter}}|^2}{\text{VGA}_{E1} \cdot BW_{E1}} \right).$$

$$(11)$$

In der Theorie sollte die E1-Rauschbandbreite nur etwa 14 MHz betragen, daher sehr viel kleiner sein als die beinahe 52 MHz-E5-Rauschbandbreite eingestellt durch das Hochpass- und das Antialiasing-Tiefpassfilter. Das E5b-Signal, das bei +15,55 NHz IF liegt, wird überhaupt nicht beeinträchtigt falls das E1-Filter angemessene Stoppbanddämpfung aufweist. Aber aufgrund der breiten E1 RF-Filterbandbreite von etwa 45 MHz, die bei diesem Hardware-Vorführmodell verwendet wird, sind die Rauschbandbreiten für das E5a- und E1-Signal etwa gleich. Wenn somit beide Wege gleichmäßig verstärkt werden, sind die SNR-Verschlechterungen des E5a- und E1-Signals beide etwa 3 dB.

Die Leistungspegel des E1- und E5-Wegs müssen korrekt eingestellt werden, um die SNR-Verschlechterung aufgrund der Überlagerung zu minimieren. Dies kann erreicht werden mit einem zusätzlichen Verstärker mit variabler Verstärkung in zumindest einem Signalweg. Bei dieser Hardwareimplementierung wird der E1-VGA verwendet, um die Grundrauschleistung zu steuern und somit die Verschlechterung zwischen L1/E1, E5 bzw. L5/E5a-Signalen.

Eine Grundrauschkalibrierung kann anfangs durchgeführt werden oder zu jedem Zeitpunkt zu dem der digitale Steueralgorithmus dies anfordert. Ein mögliches Kalibrierungsverfahren kann im digitalen Bereich implementiert werden durch Messen der Rauschvarianz von jedem Weg unabhängig, während der andere abgeschaltet ist. Wenn beide Varianzen bekannt sind, kann die Verstärkungskorrektur entsprechend eingestellt werden. Mit Hilfe des RMS-Detektors können die Rauschvarianzmessungen jedes Wegs auch im analogen Bereich durchgeführt werden, was bei dieser Hardwareimplementierung verwendet wird.

Wenn nur ein Signalweg benötigt wird, z. B. der L1/E1 GPS/-Galileo während der Erfassungsphase, kann der andere Weg abgeschaltet werden. Die SNR-Verschlechterung aufgrund der Zunahme des Grundrauschens und der Leistungsaufnahme des nicht verwendeten Wegs wird eliminiert. Dies hilft bei verschlechterten Signalumgebungen und kann auch als ein Energiesparmodus angesehen werden. In der nachfolgenden Verfolgungsphase, wenn beide Bänder verwendet werden, kann die SNR-Verschlechterung zwischen L1/E1 und E5/E5a/L5 gesteuert werden durch den E1-VGA 1120, wie nachfolgend beschrieben.

Bezüglich der Verfolgungsgenauigkeit kann z.B. angenommen werden, dass das Signal mit einer unbegrenzten Front-End-Bandbreite empfangen und die verzögerte Regelschleife (DLL) einen Skalarprodukt-(DP; DP = Dot-Product)-Diskriminator verwendet. "O. Julien, Design of Galileo L1F Receiver Tracking Loops. PhD thesis, UCGE Report No. 20227, The University of Calgary, Department of Geomatics Engineering, 2005." zeigte, dass der 1-$\sigma$-Code Verfol-gungsfehler aufgrund des additiven weißen Gaußschen Rauschens in Metereinheiten angenähert werden kann, durch:

$$\sigma = \frac{c}{f_c} \cdot \sqrt{\frac{B_L(1 - B_L T/2)\delta}{2\,C/N_0\,\alpha} \cdot \left( 1 + \frac{1}{T\,C/N_0} \right)}$$

$$(12)$$

Wobei c die Lichtgeschwindigkeit ist ausgedrückt in m/s, $f_c$ die Datenrate (chipping rate) des Signals ist, ausgedrückt in Daten/s (chips/s), $B_L$ die Codeschleifenbandbreite ist, ausgedrückt in Hz, T die verwendete kohärente Inte-grationszeit ausgedrückt in Sekunden, $\delta$ der Früh-Spät-Abstand ist, ausgedrückt in Abtastwerten, $C/N_0$, das lineare Träger/Rausch-Verhältnis in einem Hertz Bandbreite ausgedrückt in Hz, und a der Steigung der Autokorrelationshauptspitze entspricht und gleich 1 und 4 ist für BPSK- bzw. CBOC-Modulationen.

Gleichung 12 zeigt, dass die Codeverfolgungsgenauigkeit nicht nur bedingt ist durch die Charakteristika des empfangenen Signals (d. h. Abtastrate und Modulation und Träger-Rausch-Verhältnis), sondern auch durch die Parameter der Codeverfolgungsschleife (d. h. kohärente Integrationszeit, Korrelatorabstand und Schleifenbandbreite).

Typische Werte für die Parameter der Codeverfolgungsschleife sind gegeben in der folgenden Tabelle für die Galileo E1-, E5a- und E5b-Signale (siehe "C. Mongredien, M. Overbeck, and G. Rohmer, "Development and Integration of a Robust Signal Tracking Module for the Triple-Frequency Dual-Constellation GAMMAA Receiver," in Proceedings of the 23th International Technical Meeting of the Satellite Division of the Institute of Navigation, ION GNSS 2010, Portland, Oregon, September 20-24, 2010."). Ferner sind zwei Verfolgungskonfigurationen für das Galileo-E1-Signal spezifiziert, um die Einzelheiten der CBOC-Modulation aufzunehmen. Genauer gesagt, die Grob- und Fein-Konfigurationen zielen darauf ab, unverfälschte bzw. genaue Verfolgung bereitzustellen.

| Verfolgung | E1 grob | E1 fein | E5a | E5b |
|---|---|---|---|---|
| kohärente Integrationszeit [ms] | 4 | 4 | 20 | 4 |
| Früh-Spät-Beabstandung [Chips] | 1/2 | 1/8 | 1/2 | 1/2 |
| Codeschleifenbandbreite [Hz] | 2 | 1 | 1 | 1 |

Um den Korrelationsgewinn und die Verfolgungsgenauigkeit zu maximieren, kann die kohärente Integrationszeit auf die Datenbitdauer ausgedehnt werden. Ähnlich dazu ist die Korrelator-Früh-Spät-Beabstandung gewählt, um die Auswirkung von Rauschen und Mehrweg zu minimieren, ohne die Verfolgungsrobustheit zu gefährden. Unter der Annahme, dass eine Trägerunterstützung implementiert ist, muss die Codeverfolgungsschleife nicht mehr den Signalvariationen folgen, die durch Empfängerdynamik oder Taktungenauigkeiten verursacht werden, und die Schleifenbandbreite kann auf 1 Hertz reduziert werden.

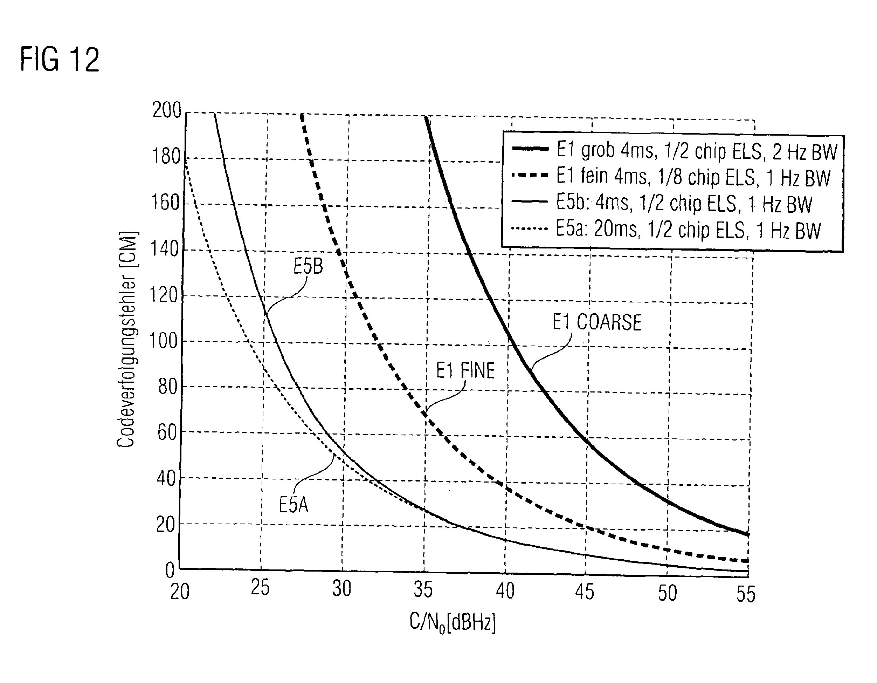

Fig. 12 zeigt die Standardabweichung des Codeverfolgungsfehlers in Zentimetern gegenüber $C/N_0$. Aufgrund der höheren Abtastrate und daher der schmaleren Korrelationsspitze ist der Verfolgungsfehler in dem Fall von E5a/b geringer als in dem Fall von E1. Daher verbessert das Erhöhen der $C/N_0$-Werte die Codeverfolgungsgenauigkeit bei E1 stärker als E5a oder E5b.

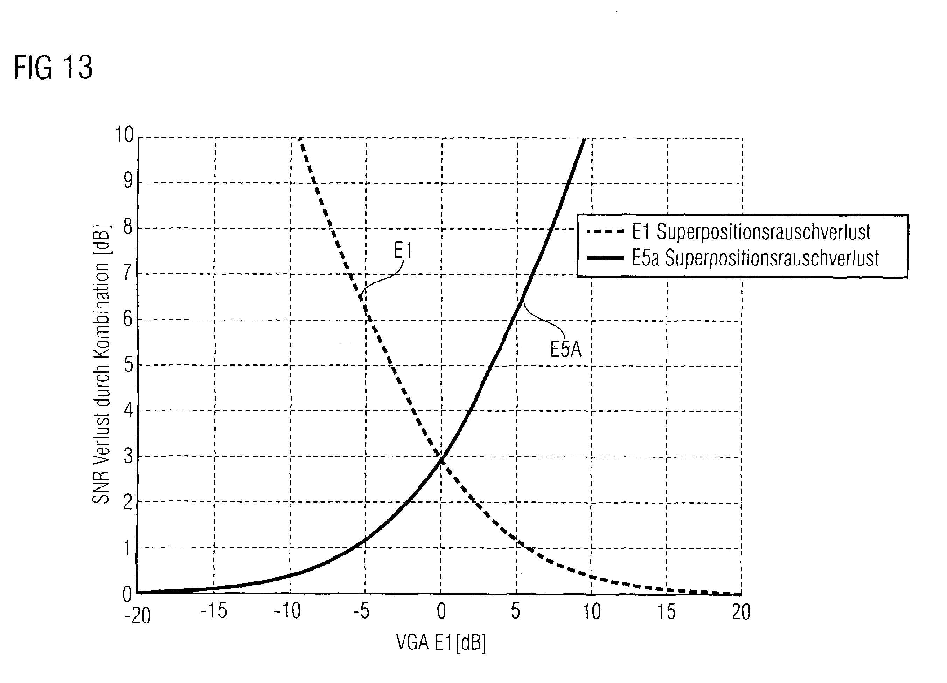

Das Überlagerungsrauschen kann zwischen dem E1- und E5a-Weg mit Hilfe eines Verstärkers mit variabler Verstärkung in einem oder beiden der Signalwege beeinflusst werden. Unter Verwendung von Gleichung 10 und 11 führt der E1-Weg-VGA, der bei dieser Hardwareimplementierung verwendet wird, zu den in Fig. 13 gezeigten SNR-Verlusten.

Im folgenden ist ein Beispiel für die Verwenden des E1-VGA, um die SNR-Verschlechterung zwischen den beiden Signalwegen zu steuern, gezeigt.

Das empfangene Träger-zu-Rauschdichte-Verhältnis variiert als Funktion des Ausbreitungskanals sowie der übertragenen Signalleistung. Mit der Ausnahme des ionosphärischen Effekts (der, wie es in einem späteren Abschnitt erörtert wird, hauptsächlich zu einer Entfernungsmessungsvorspannung führt), kann davon ausgegangen werden, dass der Ausbreitungskanal für alle Signale der gleiche ist. Da die E5a- und E5b-Signale mit etwa 2 dB mehr Leistung ausgestrahlt werden als das E1-Signal (""European GNSS (Galileo) Open Service Signal In Space Interface Control Document (OS SIS ICD) Issue 1," tech. rep., European Union/European GNSS Supervisory Authority (GSA), February 2010."), kann davon ausgegangen werden, dass die gleiche Differenz in den empfangenen Träger-Rausch-Dichte-Verhältnissen beobachtet wird.

Falls ein $C/N_0$-Wert von 38 dBHz für das E1-Signal und 40 dbHz für das E5a-Signal angenommen wird, führt die Kombination zu etwa 3 dB SNR-Verschlechterung für sowohl das E1- als auch das E5a-Signal. Daher wäre der effektive $C/N_0$ etwa 35 dBHz für E1 und 37 dBHz für E5a. Dieser 3 dB SNR-Verlust verschlechtert die E5a-Verfolgungsgenauigkeit (E5a-Linie in Fig. 12) von 0,15 m zu 0,21 m oder äquivalent eine Genauigkeitsverschlechterung von 0,06 m. Aber der gleiche 3 dB SNR-Verlust angelegt an das "grob verfolgte" E1-Signal (E1-grob-Linie in Fig. 12) bringt die Codeverfolgungsfehlerstandardabweichung (SDT; SDT = Standard Deviation) von 1,33 m zu 1,91 m oder, anders ausgedrückt, ein Genauigkeitsverlust von 0,58 m.

Das Verstärken des E1-Signals mit z. B. 6 dB reduziert den E1 SNR-Verlust auf 1 dB, aber erhöht den E5a SNR-Verlust auf 7 dB. Zurück zu Fig. 12, reduziert der 7 dB SNR-Verlust in E5a den $C/N_0$ von 45 dBHz auf 38 dBHz und erhöht den Codeverfolgungsfehler STD von 0,14 m auf 0,33 m (eine Genauigkeitsreduktion von 0,18 m). Aber nun beträgt der E1 SNR-Verlust nur 1 dB, so dass sich $C/N_0$ nur von 38 dBHz auf 37 dBHz verringert, und sich der Codeverfolgungsfehler-STD nur von 1,33 m auf 1,49 m erhöht, was einer Genauigkeitsreduktion von nur 0,16 m entspricht.

Der Vergleich zwischen dem Szenario ohne E1-VGA (und mit 3 dB SNR-Verlust sowohl auf dem E1- als auch auf dem E5a-Weg) und mit einem E1-VGA von +6 dB (und mit 1 und 7 dB SNR-Verlusten auf dem E1- bzw. E5a-Weg) ist zusammengefasst in der folgenden Tabelle und zeigt eindeutig den Vorteil der Verwendung eines E1-VGA.

|  | E1 grob | | E5a | |
|---|---|---|---|---|
| C/N$_0$ | 38 dBHz | 133 cm | 40 dBHz | 15 cm |
| Kombinierer mit | 35 dBHz | 191 cm | 37 dBHz | 21 cm |
| E1 VGA= 0 dB | | | | |
| SNR-Deg. | 3 dB | 58 cm | 3 dB | 6 cm |
| C/N$_0$ | 38 dBHz | 133 cm | 40 dBHz | 15 cm |
| Kombinierer mit | 37 dBHz | 149 cm | 33 dBHz | 33 cm |
| E1 VGA=6 dB | | | | |
| SNR-Deg. | 1 dB | 16 cm | 7 dB | 18 cm |

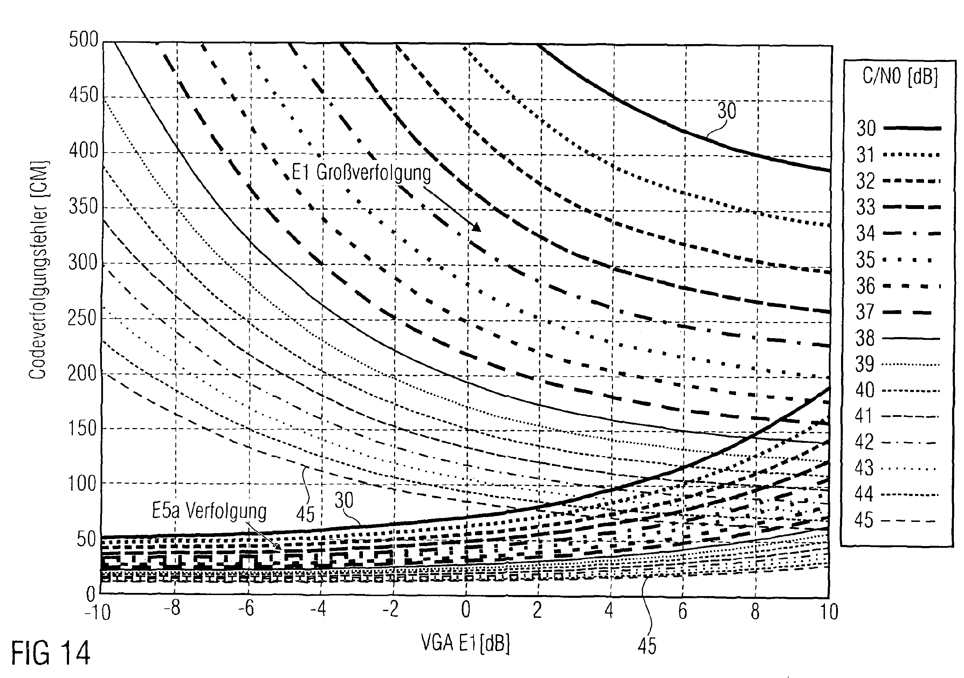

Für genauere Zweifrequenzverfolgung wird daher empfohlen, den E1-VGA zu verwenden, um den E1-Weg von so viel "E5a-Rauschen" wie möglich zu entlasten. Es muss jedoch Vorsicht ausgeübt werden, um sicherzustellen, dass die E5a-Verfolgungszuverlässigkeit nicht gehemmt wird durch übermäßige SNR-Verluste. Fig. 14, die ein Array von Kurven für unterschiedliche C/N$_0$-Werte und E1-VGA-Einstellungen zeigt, bestätigt diese Aussage.

Einer der Hauptvorteile des Mehrband-GNSS-Empfangs ist, dass dieser eine direkte Beobachtung und eine beinahe vollständige Eliminierung der ionosphäreninduzierten Entfernungsmessungsvorspannung ermöglicht. Da die Ionosphäre ein dispersives Medium ist, unterscheidet sich die Größe der Gruppenverzögerung (oder äquivalent der Entfernungsmessungsvorspannung) die von Signalen erfahren wird, die durch einen einzigen Satelliten rundgesendet werden, aber bei unterschiedlichen Frequenzen. Dies ermöglicht es, den 2-oder Mehrfrequenznutzern, die sogenannten ionosphärenfreien Pseudobereichsmessungen zu bilden, $\rho_{IF}$ gemäß der folgenden Gleichung (siehe "P. Misra and P. Enge, Global Positioning System - Signals, Measurements, and Performance, Second Edition. Ganga-Jamuna Press, 2006."):

$$\rho_{IF} = \frac{f_{E1}^2}{(f_{E1}^2 - f_{E5}^2)}(\rho_{E1} + \sigma_{E1}) - \frac{f_{E5}^2}{(f_{E1}^2 - f_{E5}^2)}(\rho_{E5} + \sigma_{E5}) \qquad (13)$$

$$\rho_{IF_{E1/E5}} = 2.33(\rho_{E1} + \sigma_{E1}) - 1.33(\rho_{E5} + \sigma_{E5})$$

$$\rho_{IF_{E1/E5a}} = 2.26(\rho_{E1} + \sigma_{E1}) - 1.26(\rho_{E5a} + \sigma_{E5a})$$

$$\rho_{IF_{E1/E5b}} = 2.42(\rho_{E1} + \sigma_{E1}) - 1.42(\rho_{E5b} + \sigma_{E5b})$$

wobei f$_{E1}$ die Galileo-E1-Trägerfrequenz (1575,42 MHz) ist, f$_{E5}$ entweder die E5a-Trägerfrequenz (1176,45 MHz) oder die E5b-Trägerfrequenz (1207,14 MHz) ist, $\rho_{E1/E5}$ die Pseudobereichsmessungen für E1 bzw. E5 sind und $\sigma_{E1/E5}$ die Pseudobereichsrauschstandardabweichung für E1 bzw. E5 sind.

Beim Betrachten der obigen Gleichung ist zu sehen, dass die Entfernung der ionosphäreninduzierten Entfernungsmessungsvorspannung auf Kosten eines Rauschanstiegs geschieht, dessen Größe von den einzelnen Frequenzpseudobereichsstandardabweichungen ($\sigma_{E1}$ und $\sigma_{E5}$) sowie der relativen Beabstandung der zwei Trägerfrequenzen abhängt, die verwendet werden, um die ionosphärenfreien Messungen $\left(\frac{f_{E1}^2}{(f_{E1}^2 - f_{E5}^2)}\right.$ und $\left.\frac{f_{E5}^2}{(f_{E1}^2 - f_{E5}^2)}\right)$ zu bilden.

Genauer gesagt, es ist möglich, $\sigma_{IF}$, die ionosphärenfreie Pseudobereichsrauschstandardabweichung gemäß der folgenden Gleichung zu berechnen (siehe "P. Misra and P. Enge, Global Positioning System - Signals, Measurements, and Performance, Second Edition. Ganga-Jamuna Press, 2006.")

$$\sigma_{IF} = \sqrt{\left(\frac{f_{E1}^2}{(f_{E1}^2 - f_{E5}^2)}\right)^2 \sigma_{E1}^2 + \left(\frac{f_{E5}^2}{(f_{E1}^2 - f_{E5}^2)}\right)^2 \sigma_{E5}^2}$$

$$(14)$$

$$\sigma_{IF_{E1/E5}} = \sqrt{(2.33)^2 \sigma_{E1}^2 + (1.33)^2 \sigma_{E5}^2}$$

$$\sigma_{IF_{E1/E5a}} = \sqrt{(2.26)^2 \sigma_{E1}^2 + (1.26)^2 \sigma_{E5a}^2}$$

$$\sigma_{IF_{E1/E5b}} = \sqrt{(2.42)^2 \sigma_{E1}^2 + (1.42)^2 \sigma_{E5b}^2}$$

Von den obigen Gleichungen ist ersichtlich, dass der E1-Pseudobereichsfehler (etwa Faktor 2,3) immer mehr Effekt hat auf den gesamten ionosphärenfreien Pseudobereich als der E5/a/b Pseudobereichsfehler (etwa Faktor 1,3). Fortfahrend mit dem vorher eingeführten Beispiel, es ist möglich, die Auswirkung des E1-VGA auf die ionosphärenfreien Pseudobereichsrauschstandardabweichung direkt zu sehen.

Wenn die gleichen anfänglichen $C/N_0$-Werte von 38 dBHz für das E1-Signal und 40 dBHz für das E5a-Signal angenommen werden, zeigt es sich, dass ein Kombinieren der E1- und E5a-Wege ohne den E1-VGA zu verwenden, zu Codeverfolgungsfehlern von 1,91 m für das E1-Signal und 0,21 m für das E5-Signal führte. Das Verwenden dieser Werte in der Gleichung 14 ergibt ein ionosphärenfreies Pseudobereichsrauschen von 4,32 m.

Andererseits zeigt es sich, dass das Kombinieren der E1- und E5a-Wege mit einer 6 dB-Verstärkung auf dem E1-Weg zu Codeverfolgungsfehlern von 1,49 m für das E1-Signal und 0,33 m für das E5a-Signal führten. Dies wiederum ergibt ein ionosphärenfreies Pseudobereichsrauschen von 3,39 m und eine Genauigkeitsverbesserung von beinahe 1 m im Vergleich zu dem Fall, wo kein E1-VGA verwendet wird. Der ideale Fall, ohne Signalüberlagerung und daher ohne irgendeine SNR-Verschlechterung, aber mit zwei Front-End-Basisbandverarbeitungsstufen würde zu einem ionosphärenfreien Pseudobereichsrauschen von 3,00 m führen. Falls somit der E1-VGA entsprechend eingestellt ist, ist die Differenz zwischen der effizienten Überlagerungslösung und der aufwendigen bestmöglichen realen Dualverarbeitungslösung geringer als 0,40 m.

Dies bestätigt die Empfehlung, die bereits für das Verfolgen gegeben wurde: Um die Genauigkeit der E1/E5 ionosphärenfreien Pseudobereichsmessung zu verbessern, ist es eindeutig vorteilhaft, den E1-Weg von "E5a-Rauschen" dank dem E1-VGA (zumindest teilweise) zu befreien.

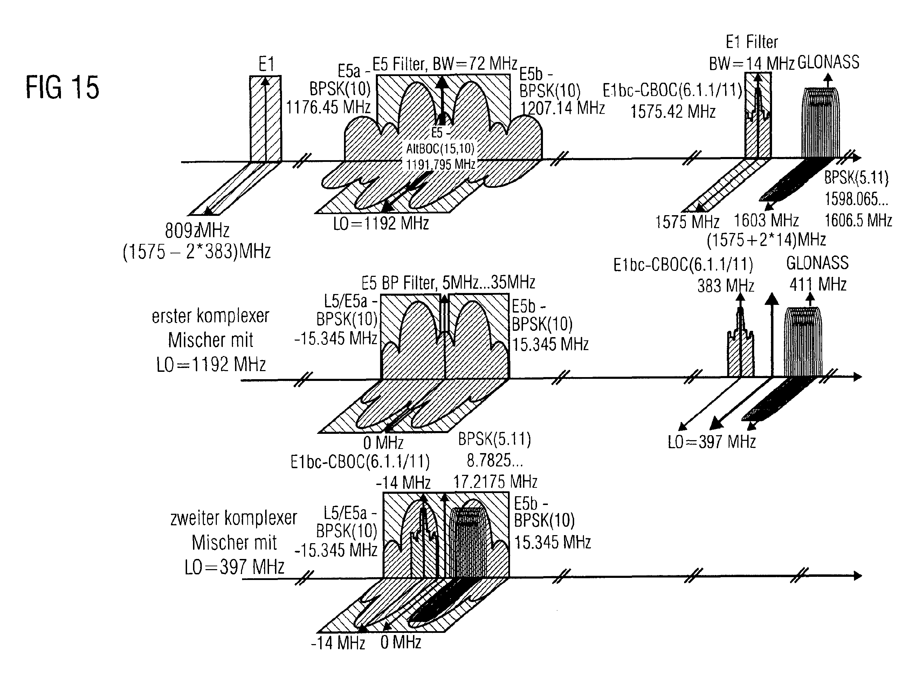

Fig. 15 zeigt eine schematische Darstellung einer Abwärtswandlung von Signalen und deren Zwischenfrequenzen die der Darstellung in Fig. 6 entspricht, jedoch zusätzlich die Verarbeitung des GLONASS G1-Signals zeigt. In anderen Worten, es ist ein Beispiel gezeigt, wie mit dem Prinzip des Mehrfrequenzbandempfängers auf Basis von Pfadüberlagerung mit Regelungsmöglichkeiten auch das GLONASS G1-Signal empfangen werden kann.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Mehrfrequenzbandempfänger (100, 200, 300, 400) mit folgenden Merkmalen:

   einem ersten Empfangspfad (110), der ausgelegt ist, um ein erstes Codemultiplex-Signal (102) zu empfangen und zu bearbeiten;

   einem zweiten Empfangspfad (120), der ausgelegt ist, um ein zweites Codemultiplex-Signal (104) zu empfangen und zu bearbeiten, wobei der erste Empfangspfad (110) oder der zweite Empfangspfad (120) einen Verstärker (124) mit variablem Verstärkungsfaktor aufweist;

   einem Kombinierer (130), der ausgelegt ist, um das erste bearbeitete Codemultiplex-Signal (112) und das zweite bearbeitete Codemultiplex-Signal (122) zu überlagern; und

   eine Codemultiplex-Basisbandstufe (140) zur Verarbeitung des überlagerten Codemultiplex-Signals (132), um ein erstes Basisband-Empfangssignal (142) und ein zweites Basisband-Empfangssignal (144) zu erhalten und zu verwenden, wobei das erste Basisband-Empfangssignal (142) Daten des ersten Codemultiplex-Signals (102) repräsentiert und das zweite Basisband-Empfangssignal (144) Daten des zweiten Codemultiplex-Signals (104) repräsentiert;

   **gekennzeichnet durch** eine Verstärkersteuerung (150), die ausgelegt ist, um den Verstärkungsfaktor des Verstärkers (124) mit variablem Verstärkungsfaktor zu steuern, so dass das erste Basisband-Empfangssignal (142) oder das zweite Basisband-Empfangssignal (144) eine variabel vorgebbare, betriebszustandsabhängige Mindestempfangsqualität aufweist.

2. Ein Mehrfrequenzbandempfänger gemäß Anspruch 1, der einen Empfangsqualitätsbestimmer aufweist, der ausgelegt ist, um eine Empfangsqualität des ersten Basisband-Empfangssignals (142) oder eine Empfangsqualität des zweiten Basisband-Empfangssignals (144) zu bestimmen, und wobei die Verstärkersteuerung (150) ausgelegt ist, um basierend auf der bestimmten Empfangsqualität des ersten Basisband-Empfangssignals (142) oder der bestimmten Empfangsqualität des zweiten Basisband-Empfangssignals (144) den Verstärkungsfaktor zu steuern.

3. Mehrfrequenzbandempfänger gemäß einem der Ansprüche 1 bis 2, der eine Betriebszustandssteuerung (220) aufweist, die ausgelegt ist, um einen Wert der variabel vorgebbaren betriebszustandsabhängigen Mindestempfangsqualität basierend auf einem Betriebszustand des Mehrfrequenzbandempfängers vorzugeben.

4. Mehrfrequenzbandempfanger gemäß Anspruch 1, wobei die Verstärkersteuerung (150) ausgelegt ist, um den Verstärkungsfaktor basierend auf einem Betriebszustand des Mehrfrequenzbandempfängers auf einen festen vorgegebenen Wert einzustellen.

5. Mehrfrequenzbandempfänger gemäß einem der Ansprüche 1 bis 4, der ausgelegt ist, so dass durch eine Veränderung des Verstärkungsfaktors des Verstärkers (124) ein Verhältnis eines Signal-zu-Rausch-Verhältnis des ersten Basisband-Empfangssignals (142) und eines Signal-Rausch-Verhältnis des zweiten Basisband-Empfangssignals (1449 zueinander verändert wird.

6. Mehrfrequenzbandempfänger gemäß einem der Ansprüche 1 bis 5, der ausgelegt ist, so dass durch eine Vorgabe eines ersten Werts der variabel vorgebbaren, betriebszustandsabhängigen Mindestempfangsqualität für das erste Basisband-Empfangssignal (142) oder das zweite Basisband-Empfangssignal (144) das jeweils andere Basisband-Empfangssignal einen ersten Wert seiner Empfangsqualität aufweist und durch eine Vorgabe eines zweiten Werts der variabel vorgebbaren, betriebszustandsabhängigen Mindestempfangsqualität für das erste Basisband-Empfangssignal (142) oder das zweite Basisband-Empfangssignal (144) das jeweils andere Basisband-Empfangssignal einen zweiten Wert seiner Empfangsqualität aufweist, wobei der erste Wert der Empfangsqualität des anderen Basisband-Empfangssignals kleiner ist als der zweite Wert der Empfangsqualität des anderen Basisband-Empfangssignals, wenn der erste Wert der variabel vorgebbaren, betriebszustandsabhängigen Mindestempfangsqualität größer ist als der zweite Wert der variabel vorgebbaren, betriebszustandsabhängigen Mindestempfangsqualität.

7. Mehrfrequenzbandempfänger gemäß einem der Ansprüche 1 bis 6, wobei die Codemultiplex-Basisbandstufe einen Verstärker (224) mit variablem Verstärkungsfaktor und einen Analog-Digital-Wandler (244) aufweist, wobei der Verstärker (242) der Codemultiplex-Basisbandstufe (140) ausgelegt ist, um das überlagerte Codemultiplex-Signal (132) zu verstärken und dem Analog-Digital-Wandler (244) bereitzustellen, so dass eine maximale Spannung des verstärkten überlagerten Codemultiplex-Signals an einen Arbeitsbereich des Analog-Digital-Wandlers (244) angepasst ist.

8. Mehrfrequenzbandempfänger gemäß einem der Ansprüche 1 bis 7, wobei die Verstärkersteuerung (150) ausgelegt ist, um den Verstärkungsfaktor zu steuern, sodass das erste Basisband-Empfangssignal (142) oder das zweite Basisband-Empfangssignal (144) eine variabel vorgebbare, betriebszustandsabhängige Mindestempfangsqualität aufweist und das jeweils andere Basisband-Empfangssignal eine Empfangsqualität größer als die variabel vorgebbare, betriebszustandsabhängige Mindestempfangsqualität aufweist.

9. Mehrfrequenzbandempfänger gemäß einem der Ansprüche 1 bis 8, wobei der erste Empfangspfad (110) und der zweite Empfangspfad (120) je einen Verstärker (124) mit variablem Verstärkungsfaktor aufweisen, wobei die Verstärkersteuerung (150) ausgelegt ist, um den Verstärkungsfaktor des Verstärkers (124) des ersten Empfangspfads (110) und den Verstärkungsfaktor des Verstärkers (124) des zweiten Empfangspfads (120) zu steuern, so dass das erste Basisband-Empfangssignal (142) oder das zweite Basisband-Empfangssignal (144) die variabel vorgebbare, betriebszustandsabhängige Mindestempfangsqualität aufweist.

10. Mehrfrequenzbandempfänger gemäß einem der Ansprüche 1 bis 9, der eine Anzahl von N Empfangspfaden zum Empfangen und Verarbeiten von N Codemultiplex-Signalen aufweist, wobei zumindest N-1 Empfangspfade der N Empfangspfade je einen Verstärker (124) mit variablem Verstärkungsfaktor aufweisen, wobei der Kombinierer ausgelegt ist, um die bearbeiteten Codemultiplex-Signale der N Empfangspfade zu überlagern, wobei die Codemultiplex-Basisbandstufe (140) ausgelegt ist, um basierend auf dem überlagerten Codemultiplex-Signal N Basisband-Empfangssignale zu erhalten, wobei die Verstärkersteuerung (150) ausgelegt ist, um den Verstärkungsfaktor jedes Verstärkers (124) der zumindest N-1 Empfangspfade zu steuern, so dass zumindest eines der N Basisband-Empfangssignale die variabel vorgebbare, betriebszustandsabhängige Mindestempfangsqualität aufweist.

11. Mehrfrequenzbandempfanger gemäß einem der Ansprüche 1 bis 10, wobei der erste Empfangspfad (110) ausgelegt ist, um das erste Codemultiplex-Signal (102) zu bearbeiten, so dass das erste bearbeitete Codemultiplex-Signal (112) Frequenzen innerhalb eines Basisbands der Codemultiplex-Basisbandstufe (140) aufweist, und wobei der zweite Empfangspfad (120) ausgelegt ist, um das zweite Codemultiplex-Signal (104) zu bearbeiten, so dass das zweite bearbeitete Codemultiplex-Signal (122) Frequenzen innerhalb des Basisbands der Codemultiplex-Basisbandstufe (140) aufweist.

12. Mehrfrequenzbandempfänger gemäß einem der Ansprüche 1 bis 11, wobei der Mehrfrequenzbandempfänger ein Satellitennavigationsempfänger oder ein Mobilfunkempfänger ist.

13. Mehrfrequenzbandempfänger gemäß einem der Ansprüche 1 bis 12, wobei die Codemultiplex-Basisbandstufe (140) ausgelegt ist, um basierend auf dem ersten Basisband-Empfangssignal (142) und dem zweiten Basisband-Empfangssignal (144) eine Ionosphärenkorrektur des ersten Basisband-Empfangssignals (142) und des zweiten Basisband-Empfangssignals (144) durchzuführen.

14. Mehrfrequenzbandempfänger gemäß einem der Ansprüche 1 bis 13, wobei das erste Codemultiplex-Signal (102) ein erstes Frequenzband eines Satellitensignals repräsentiert und das zweite Codemultiplex-Signal (104) ein zweites Frequenzband des Satellitensignals repräsentiert, wobei das erste Frequenzband eine größere Bandbreite als das zweite Frequenzband aufweist.

15. Mehrfrequenzbandempfänger gemäß einem der Ansprüche 1 bis 14, wobei das erste Basisband-Empfangssignal (142) eine größere Bandbreite als das zweite Basisband-Empfangssignal (144) aufweist, wobei die Verstärkersteuerung (150) ausgelegt ist, um in einer Initialisierungsphase den Verstärkungsfaktor zu steuern, so dass das zweite Basisband-Empfangssignal (144) einen ersten Wert der variabel vorgebbaren, betriebszustandsabhängigen Mindestempfangsqualität aufweist, und ausgelegt ist, um in einer Lokalisierungsphase den Verstärkungsfaktor zu steuern, so dass das zweite Basisband-Empfangssignal (144) einen zweiten Wert der variabel vorgebbaren, betriebszustandsabhängigen Mindestempfangsqualität aufweist, wobei der erste Wert der variabel vorgebbaren, betriebszustandsabhängigen Mindestempfangsqualität höher ist als der zweite Wert der variabel vorgebbaren, betriebszustandsabhängigen Mindestempfangsqualität, so dass eine Empfangsqualität des ersten Basisband-Empfangssignals (142) in der Lokalisierungsphase höher ist als eine Empfangsqualität des ersten Basisband-Empfangssignals (142) in der Initialisierungsphase.

16. Mehrfrequenzbandempfänger gemäß einem der Ansprüche 1 bis 15, der einen dritten Empfangspfad zum Empfangen und Bearbeiten eines dritten Codemultiplex-Signals mit einem weiteren Verstärker mit variablem Verstärkungsfaktor aufweist, wobei der Kombinierer (130) ausgelegt ist, um das erste Codemultiplex-Signal, das zweite Codemultiplex-Signal und das dritte Codemultiplex-Signal zu überlagern, wobei die Codemultiplex-Basisbandstufe (140) ausgelegt ist, um ein drittes Basisband-Empfangssignal zu erhalten und zu verwenden, wobei das dritte Basisband-Empfangssignal Daten des dritten Codemultiplex-Signals repräsentiert, wobei die Verstärkersteuerung (150) ausgelegt ist, um den Verstärkungsfaktor des Verstärkers und den Verstärkungsfaktor des weiteren Verstärkers zu steuern, so dass zumindest zwei Basisband-Empfangssignale des ersten bis dritten Basisband-Empfangssignals eine variabel vorgebbare, betriebszustandsabhängige Mindestempfangsqualität aufweisen.

17. Mehrfrequenzbandempfänger gemäß Anspruch 16, wobei das erste Codemultiplex-Signal ein erstes Frequenzband eines Satellitensignals repräsentiert und das zweite Codemultiplex-Signal ein zweites Frequenzband des Satellitensignals repräsentiert, wobei das erste Frequenzband eine größere Bandbreite als das zweite Frequenzband aufweist, wobei das dritte Codemultiplex-Signal ein drittes Frequenzband des Satellitensignals oder ein Mobilfunksignal repräsentiert.

18. Mehrfrequenzbandempfänger gemäß einem der Ansprüche 1 bis 17, der eine Oszillatorstufe (410) zur Bereitstellung eines Lokaloszillatorsignals aufweist, wobei der erste Empfangspfad (110) einen Mischer (326) aufweist, der mit dem Lokaloszillatorsignal versorgbar ist, und wobei der zweite Empfangspfad (120) einen Mischer (326) aufweist, der ebenfalls mit dem Lokaloszillatorsignal versorgbar ist.

19. Mehrfrequenzbandempfänger gemäß Anspruch 18, wobei der Mischer (326) in dem ersten Empfangspfad (110) und der Mischer (326) in dem zweiten Empfangspfad (120) als Inphasen-Quadraturphasen-Mischer ausgelegt sind, wobei die Oszillatorstufe (410) ausgelegt ist, um das Lokaloszillatorsignal so zu liefern, dass es eine Inphasen-Komponente und eine Quadraturphasenkomponente aufweist, die dem Inphasen-Quadraturphasen-Mischer (326) in dem ersten Empfangspfad (110) in dem Inphasen-Quadraturphasen-Mischer (326) in dem zweiten Empfangspfad (120) zugeführt wird.

20. Mehrfrequenzbandempfänger gemäß einem der Ansprüche 1 bis 19, bei dem der erste Empfangspfad (110) einen Inphasen-Ausgang und einen Quadraturphasen-Ausgang aufweist, bei dem der zweite Empfangspfad (120) einen Inphasen-Ausgang und eine Quadraturphasen-Ausgang aufweist und bei dem die Codemultiplex-Basisbandstufe (140) einen Inphasen-Eingang und einen Quadraturphasen-Eingang aufweist, wobei der Kombinierer (130) ausgelegt ist, um ein Signal an dem Inphasen-Ausgang des ersten Empfangspfads (110) und ein Signal an dem Inphasen-Ausgang des zweiten Empfangspfad (120) zu überlagern und der Codemultiplex-Basisbandstufe (140) an dem Inphasen-Eingang zur Verfügung zu stellen, und wobei der Kombinierer (130) ausgelegt ist, um ein Signal an dem Quadraturphasen-Ausgang des ersten Empfangspfads (110) und ein Signal an dem Quadraturphasen-Ausgang des zweiten Empfangspfad (120) zu überlagern und der Codemultiplex-Basisbandstufe (140) an dem Quadraturphasen-Eingang zur Verfügung zu stellen.

21. Verfahren zum Empfangen von Codemultiplex-Signalen mit einem Mehrfrequenzbandempfänger mit folgenden Schritten:

Empfangen und Bearbeiten (1210) eines ersten Codemultiplex-Signals in einem ersten Empfangspfad;

Empfangen und Bearbeiten (1220) eines zweiten Codemultiplex-Signals in einem zweiten Empfangspfad, wobei der erste Empfangspfad oder der zweite Empfangspfad einen Verstärker mit variablem Verstärkungsfaktor aufweist;

Überlagern (1230) des ersten bearbeiteten Codemultiplex-Signals und des zweiten bearbeiteten Codemultiplex-Signals; und

Verarbeiten (1240) des überlagerten Codemultiplex-Signals, um ein erstes Basisband-Empfangssignal und ein zweites Basisband-Empfangssignal zu erhalten und zu verwenden, wobei das erste Basisband-Empfangssignal Daten des ersten Codemultiplex-Signals repräsentiert und das zweite Basisband-Empfangssignal Daten des zweiten Codemultiplex-Signals repräsentiert;

**gekennzeichnet durch** das Steuern (1250) des Verstärkungsfaktors des Verstärkers mit variablem Verstärkungsfaktor, so dass das erste Basisband-Empfangssignal oder das zweite Basisband-Empfangssignal eine variabel vorgebbare, betriebszustandsabhängige Mindestempfangsqualität aufweist.

22. Computerprogramm mit einem Programmcode zur Durchführung des Verfahrens gemäß Anspruch 21, wenn das Computerprogramm auf einem Computer oder Mikrocontroller abläuft.

**Claims**

1. Multi-frequency band receiver (100, 200, 300, 400) comprising:

a first receive path (110) configured to receive and process a first code multiplex signal (102);
a second receive path (120) configured to receive and process a second code multiplex signal (104), the first receive path (110) or the second receive path (120) comprising an amplifier (124) having a variable gain factor;
a combiner (130) configured to superpose the first processed code multiplex signal (112) and the second processed code multiplex signal (122); and
a code multiplex baseband stage (140) for processing the superposed code multiplex signal (132) to obtain and use a first baseband receive signal (142) and a second baseband receive signal (144), the first baseband receive signal (142) representing data of the first code multiplex signal (102), and the second baseband receive signal (144) representing data of the second code multiplex signal (104);
**characterized by** an amplifier controller (150) configured to control the gain factor of the amplifier (124) having a variable gain factor so that the first baseband receive signal (142) or the second baseband receive signal (144) comprises a minimum reception quality which can be variably predetermined and is dependent on the operating state.

2. Multi-frequency band receiver as claimed in claim 1, comprising a reception quality determiner configured to determine a reception quality of the first baseband receive signal (142) or a reception quality of the second baseband receive signal (144), and wherein the amplifier controller (150) is configured to control the gain factor on the basis of the determined reception quality of the first baseband receive signal (142) or of the determined reception quality of the second baseband receive signal (144).

3. Multi-frequency band receiver as claimed in one of claims 1 to 2, comprising an operating state controller (220) configured to predetermine a value of the minimum reception quality, which can be variably predetermined and is dependent on the operating state, on the basis of an operating state of the multi-frequency band receiver.

4. Multi-frequency band receiver as claimed in claim 1, wherein the amplifier controller (150) is configured to set the gain factor to a fixed predetermined value on the basis of an operating state of the multi-frequency band receiver.

5. Multi-frequency band receiver as claimed in any of claims 1 to 4, configured such that a ratio of a signal-to-noise ratio of the first baseband receive signal (142) and of a signal-to-noise ratio of the second baseband receive signal (144) is changed by a change in the gain factor of the amplifier (124).

6. Multi-frequency band receiver as claimed in any of claims 1 to 5, configured such that by predetermining a first value of the minimum reception quality, which can be variably predetermined and is dependent on the operating state, for the first baseband receive signal (142) or for the second baseband receive signal (144), the respectively other baseband receive signal comprises a first value of its reception quality, and by predetermining a second value of the minimum reception quality, which can be variably predetermined and is dependent on the operating state, for the first baseband receive signal (142) or for the second baseband receive signal (144), the respectively other baseband receive signal comprises a second value of its reception quality, the first value of the reception quality of the other baseband receive signal being smaller than the second value of the reception quality of the other baseband receive signal if the first value of the minimum reception quality which can be variably predetermined and is dependent on the operating state is larger than the second value of the minimum reception quality which can be variably predetermined and is dependent on the operating state.

7. Multi-frequency band receiver as claimed in any of claims 1 to 6, wherein the code multiplex baseband stage comprises an amplifier (224) having a variable gain factor and an analog-to-digital converter (244), the amplifier (242) of the code multiplex baseband stage (140) being configured to amplify the superposed code multiplex signal (132) and to provide it to the analog-to-digital converter (244), so that a maximum voltage of the amplified superposed code multiplex signal is adapted to an operating range of the analog-to-digital converter (244).

8. Multi-frequency band receiver as claimed in any of claims 1 to 7, wherein the amplifier controller (150) is configured to control the gain factor so that the first baseband receive signal (142) or the second baseband receive signal (144) comprises a minimum reception quality which can be variably predetermined and is dependent on the operating state and that the respectively other baseband receive signal has a reception quality that is higher than the minimum reception quality which can be variably predetermined and is dependent on the operating state.

9. Multi-frequency band receiver as claimed in any of claims 1 to 8, wherein the first receive path (110) and the second receive path (120) each comprise an amplifier (124) having a variable gain factor, wherein the amplifier controller (150) is configured to control the gain factor of the amplifier (124) of the first receive path (110) and the gain factor of the amplifier (124) of the second receive path (120) so that the first baseband receive signal (142) or the second baseband receive signal (144) comprises the minimum reception quality which can be variably predetermined and is dependent on the operating state.

10. Multi-frequency band receiver as claimed in any of claims 1 to 9, comprising a number of N receive paths for receiving and processing N code multiplex signals, at least N-1 receive paths of the N receive paths each comprising an amplifier (124) having a variable gain factor, the combiner being configured to superpose the processed code multiplex signals of the N receive paths, the code multiplex baseband stage (140) being configured to obtain N baseband receive signals on the basis of the superposed code multiplex signal, the amplifier controller (150) being configured to control the gain factor of each amplifier (124) of the at least N-1 receive paths so that at least one of the N baseband receive signals comprises the minimum reception quality which can be variably predetermined and is dependent on the operating state.

11. Multi-frequency band receiver as claimed in any of claims 1 to 10, wherein the first receive path (110) is configured to process the first code multiplex signal (102) so that the first processed code multiplex signal (112) comprises frequencies within a baseband of the code multiplex baseband stage (140), and wherein the second receive path (120) is configured to process the second code multiplex signal (104) so that the second processed code multiplex signal (122) comprises frequencies within the baseband of the code multiplex baseband stage (140).

12. Multi-frequency band receiver as claimed in any of claims 1 to 11, the multi-frequency band receiver being a satellite navigation receiver or a mobile radio receiver.

13. Multi-frequency band receiver as claimed in any of claims 1 to 12, wherein the code multiplex baseband stage (140) is configured to perform an ionospheric correction of the first baseband receive signal (142) and of the second baseband receive signal (144) on the basis of the first baseband receive signal (142) and of the second baseband receive signal (144).

14. Multi-frequency band receiver as claimed in any of claims 1 to 13, wherein the first code multiplex signal (102) represents a first frequency band of a satellite signal, and the second code multiplex signal (104) represents a second frequency band of the satellite signal, the first frequency band having a larger bandwidth than the second frequency band.

15. Multi-frequency band receiver as claimed in any of claims 1 to 14, wherein the first baseband receive signal (142) has a larger bandwidth than the second baseband receive signal (144), wherein the amplifier controller (150) is configured to control the gain factor in an initialization phase so that the second baseband receive signal (144) comprises a first value of the minimum reception quality which can be variably predetermined and is dependent on the operating state, and is configured to control the gain factor in a localization phase so that the second baseband receive signal (144) comprises a second value of the minimum reception quality which can be variably predetermined and is dependent on the operating state, the first value of the minimum reception quality which can be variably predetermined and is dependent on the operating state being higher than the second value of the minimum reception quality which can be variably predetermined and is dependent on the operating state, so that a reception quality of the first baseband receive signal (142) in the localization phase is higher than a reception quality of the first baseband receive signal (142) in the initialization phase.

16. Multi-frequency band receiver as claimed in any of claims 1 to 15, comprising a third receive path for receiving and processing a third code multiplex signal comprising a further amplifier having a variable gain factor, wherein the combiner (130) is configured to superpose the first code multiplex signal, the second code multiplex signal and the third code multiplex signal, the code multiplex baseband stage (140) being configured to obtain and use a third baseband receive signal, the third baseband receive signal representing data of the third code multiplex signal, the amplifier controller (150) being configured to control the gain factor of the amplifier and the gain factor of the further amplifier so that at least two baseband receive signals of the first to third baseband receive signals comprise a minimum reception quality which can be variably predetermined and is dependent on the operating state.

17. Multi-frequency band receiver as claimed in claim 16, wherein the first code multiplex signal represents a first frequency band of a satellite signal, and the second code multiplex signal represents a second frequency band of the satellite signal, the first frequency band having a larger bandwidth than the second frequency band, the third code multiplex signal representing a third frequency band of the satellite signal or a mobile radio signal.

18. Multi-frequency band receiver as claimed in any of claims 1 to 17, comprising an oscillator stage (410) for providing a local oscillator signal, the first receive path (110) comprising a mixer (326) which can be supplied with the local oscillator signal, and the second receive path (120) comprising a mixer (326) which can also be supplied with the local oscillator signal.

19. Multi-frequency band receiver as claimed in claim 18, wherein the mixer (326) in the first receive path (110) and the mixer (326) in the second receive path (120) are configured as in-phase quadrature-phase mixers, wherein the oscillator stage (410) is configured to provide the local oscillator signal such that it comprises an in-phase component and a quadrature-phase component, which is supplied to the in-phase quadrature-phase mixer (326) in the first receive path (110) and the in-phase quadrature-phase mixer (326) in the second receive path (120).

20. Multi-frequency band receiver as claimed in any of claims 1 to 19, wherein the first receive path (110) comprises an in-phase output and a quadrature-phase output, wherein the second receive path (120) comprises an in-phase output and a quadrature-phase output, and wherein the code multiplex baseband stage (140) comprises an in-phase input and a quadrature-phase input, the combiner (130) being configured to superpose a signal at the in-phase output of the first receive path (110) and a signal at the in-phase output of the second receive path (120) and to provide same to the code multiplex baseband stage (140) at the in-phase input, and the combiner (130) being configured to superpose a signal at the quadrature-phase output of the first receive path (110) and a signal at the quadrature-phase output of the second receive path (120) and to provide same to the code multiplex baseband stage (140) at the quadrature-phase input.

21. Method of receiving code multiplex signals with a multi-frequency band receiver, comprising:

receiving and processing (1210) a first code multiplex signal in a first receive path;

receiving and processing (1220) a second code multiplex signal in a second receive path, the first receive path or the second receive path comprising an amplifier having a variable gain factor;
superposing (1230) the first processed code multiplex signal and the second processed code multiplex signal; and
processing (1240) the superposed code multiplex signal to obtain and use a first baseband receive signal and a second baseband receive signal, the first baseband receive signal representing data of the first code multiplex signal, and the second baseband receive signal representing data of the second code multiplex signal; and
**characterized by** said controlling (1250) of the gain factor of the amplifier having a variable gain factor so that the first baseband receive signal or the second baseband receive signal comprises a minimum reception quality which can be variably predetermined and is dependent on the operating state.

22. Computer program comprising a program code for performing the method as claimed in claim 21, when the computer program runs on a computer or microcontroller.

## Revendications

1. Récepteur à bande multifréquence (100, 200, 300, 400), aux caractéristiques suivantes:

   un premier trajet de réception (110) conçu pour recevoir et traiter un premier signal à multiplexage de code (102);
   un deuxième trajet de réception (120) conçu pour recevoir et traiter un deuxième signal à multiplexage de code (104), où le premier trajet de réception (110) ou le deuxième trajet de réception (120) présente un amplificateur (124) à facteur d'amplification variable;
   un combineur (130) conçu pour superposer le premier signal à multiplexage de code traité (112) et le deuxième signal à multiplexage de code traité (122); et
   un étage de bande de base à multiplexage de code (140) destiné à traiter le signal à multiplexage de code superposé (132), pour obtenir et utiliser un premier signal de réception de bande de base (142) et un deuxième signal de réception de bande de base (144), où le premier signal de réception de bande de base (142) représente les données du premier signal à multiplexage de code (102) et le deuxième signal de réception de bande de base (144) représente les données du deuxième signal à multiplexage de code (104);
   **caractérisé par** une commande d'amplificateur (150) conçue pour régler le facteur d'amplification de l'amplificateur (124) à facteur d'amplification variable de sorte que le premier signal de réception de bande de base (142) ou le deuxième signal de réception de bande de base (144) présente une qualité de réception minimale qui dépend de l'état de fonctionnement et peut être prédéterminée de façon variable.

2. Récepteur à bande multifréquence selon la revendication 1, qui présente un déterminateur de qualité de réception conçu pour déterminer une qualité de réception du premier signal de réception de bande de base (142) ou une qualité de réception du deuxième signal de réception de bande de base (144), et dans lequel la commande d'amplificateur (150) est conçue pour régler le facteur d'amplification sur base de la qualité de réception déterminée du premier signal de réception de bande de base (142) ou de la qualité de réception déterminée du deuxième signal de réception de bande de base (144).

3. Récepteur à bande multifréquence selon l'une des revendications 1 à 2, qui présente une commande d'état de fonctionnement (220) conçue pour prédéterminer une valeur de la qualité de réception minimale qui dépend de l'état de fonctionnement et peut être prédéterminée de façon variable sur base d'un état de fonctionnement du récepteur à bande multifréquence.

4. Récepteur à bande multifréquence selon la revendication 1, dans lequel la commande d'amplificateur (150) est conçue pour régler le facteur d'amplification sur base d'un état de fonctionnement du récepteur à bande multifréquence à une valeur prédéterminée fixe.

5. Récepteur à bande multifréquence selon l'une des revendications 1 à 4, qui est conçu de sorte que par une modification du facteur d'amplification de l'amplificateur (124) est changé un rapport entre un rapport signal-bruit du premier signal de réception de bande de base (142) et un rapport signal-bruit du deuxième signal de réception de bande de base (144).

6. Récepteur à bande multifréquence selon l'une des revendications 1 à 5, qui est conçu de sorte que, par une prédétermination d'une première valeur de la qualité de réception minimale qui dépend de l'état de fonctionnement et peut être prédéterminée de façon variable du premier signal de réception de bande de base (142) ou du deuxième signal de réception de bande de base (144), l'autre signal de réception de bande de base respectif présente une première valeur de sa qualité de réception et, par une prédétermination d'une deuxième valeur de la qualité de réception minimale qui dépend de l'état de fonctionnement et peut être prédéterminée de façon variable du premier signal de réception de bande de base (142) ou du deuxième signal de réception de bande de base (144), l'autre signal de réception de bande de base respectif présente une deuxième valeur de sa qualité de réception, dans lequel la première valeur de la qualité de réception de l'autre signal de réception de bande de base est inférieure à la deuxième valeur de la qualité de réception de l'autre signal de réception de bande de base lorsque la première valeur de la qualité de réception minimale qui dépende l'état de fonctionnement et peut être prédéterminée de façon variable est supérieure à la deuxième valeur de la qualité de réception minimale qui dépend de l'état de fonctionnement et peut être prédéterminée de façon variable.

7. Récepteur à bande multifréquence selon l'une des revendications 1 à 6, dans lequel l'étage de bande de base à multiplexage de code présente un amplificateur (224) à facteur d'amplification variable et un convertisseur analogique-numérique (244), dans lequel l'amplificateur (242) de l'étage de bande de base à multiplexage de code (140) est conçu pour amplifier le signal à multiplexage de code superposé (132) et le mettre à disposition du convertisseur analogique-numérique (244), de sorte qu'une tension maximale du signal à multiplexage de code superposé amplifié soit adaptée à une plage de fonctionnement du convertisseur analogique-numérique (244).

8. Récepteur à bande multifréquence selon l'une des revendications 1 à 7, dans lequel la commande d'amplificateur (150) est conçue pour régler le facteur d'amplification de sorte que le premier signal de réception de bande de base (142) ou le deuxième signal de réception de bande de base (144) présente une qualité de réception minimale qui dépend de l'état de fonctionnement et peut être prédéterminée de façon variable et l'autre signal de réception de bande de base respectif présente une qualité de réception supérieure à la qualité de réception minimale qui dépend de l'état de fonctionnement et peut être prédéterminée de façon variable.

9. Récepteur à bande multifréquence selon l'une des revendications 1 à 8, dans lequel le premier trajet de réception (110) et le deuxième trajet de réception (120) présentent, chacun, un amplificateur (124) à facteur d'amplification variable, dans lequel la commande d'amplificateur (150) est conçue pour régler le facteur d'amplification de l'amplificateur (124) du premier trajet de réception (110) et le facteur d'amplification de l'amplificateur (124) du deuxième trajet de réception (120) de sorte que le premier signal de réception de bande de base (142) ou le deuxième signal de réception de bande de base (144) présente la qualité de réception minimale qui dépend de l'état de fonctionnement et peut être prédéterminée de façon variable.

10. Récepteur à bande multifréquence selon l'une des revendications 1 à 9, qui présente un nombre N de trajets de réception destinés à recevoir et traiter N signaux à multiplexage de code, dans lequel au moins N-1 trajets de réception des N trajets de réception présentent, chacun, un amplificateur (124) à facteur d'amplification variable, dans lequel le combineur est conçu pour superposer les signaux à multiplexage de code traités des N trajets de réception, dans lequel l'étage de bande de base à multiplexage de code (140) est conçu pour recevoir, sur base du signal à multiplexage de code superposé, N signaux de réception de bande de base, dans lequel la commande d'amplificateur (150) est conçue pour régler le facteur d'amplification de chaque amplificateur (124) des au moins N-1 trajets de réception de sorte qu'au moins l'un des N signaux de réception de bande de base présente la qualité de réception minimale qui dépende l'état de fonctionnement et peut être prédéterminée de façon variable.

11. Récepteur à bande multifréquence selon l'une des revendications 1 à 10, dans lequel le premier trajet de réception (110) est conçu pour traiter le premier signal à multiplexage de code (102) de sorte que le premier signal à multiplexage de code traité (112) présente des fréquences dans une bande de base de l'étage de base à multiplexage de code (140), et dans lequel le deuxième trajet de réception (120) est conçu pour traiter le deuxième signal à multiplexage de code (104) de sorte que le deuxième signal à multiplexage de code traité (122) présente des fréquences dans la bande de base de l'étage de bande de base à multiplexage de code (140).

12. Récepteur à bande multifréquence selon l'une des revendications 1 à 11, dans lequel le récepteur à bande multifréquence est un récepteur de navigation par satellite ou un récepteur de radiocommunication mobile.

13. Récepteur à bande multifréquence selon l'une des revendications 1 à 12, dans lequel l'étage de bande de base à multiplexage de code (140) est conçu pour réaliser, sur base du premier signal de réception de bande de base (142) et du deuxième signal de réception de bande de base (144), une correction ionosphérique du premier signal de réception de bande de base (142) et du deuxième signal de réception de bande de base (144).

**14.** Récepteur à bande multifréquence selon l'une des revendications 1 à 13, dans lequel le premier signal à multiplexage de code (102) représente une première bande de fréquence d'un signal de satellite et le deuxième signal à multiplexage de code (104) représente une deuxième bande de fréquences du signal de satellite, dans lequel la première bande de fréquences présente une plus grande largeur de bande que la deuxième bande de fréquences.

**15.** Récepteur à bande multifréquence selon l'une des revendications 1 à 14, dans lequel le premier signal de réception de bande de base (142) présente une plus grande largeur de bande que le deuxième signal de réception de bande de base (144), dans lequel la commande d'amplificateur (150) est conçue pour régler, dans une phase d'initialisation, le facteur d'amplification de sorte que le deuxième signal de réception de bande de base (144) présente une première valeur de la qualité de réception minimale qui dépend de l'état de fonctionnement et peut être prédéterminée de façon variable et est conçu pour régler, dans une phase de localisation, le facteur d'amplification de sorte que le deuxième signal de réception de bande de base (144) présente une deuxième valeur de la qualité de réception minimale qui dépend de l'état de fonctionnement et peut être prédéterminée de façon variable, la première valeur de la qualité de réception minimale qui dépend de l'état de fonctionnement et peut être prédéterminée de façon variable étant supérieure à la deuxième valeur de la qualité de réception minimale qui dépend de l'état de fonctionnement et peut être prédéterminée de façon variable, de sorte qu'une qualité de réception du premier signal de réception de bande de base (142) dans la phase de localisation soit supérieure à une qualité de réception du premier signal de réception de bande de base (142) dans la phase d'initialisation.

**16.** Récepteur à bande multifréquence selon l'une des revendications 1 à 15, qui présente un troisième trajet de réception pour la réception et le traitement d'un troisième signal à multiplexage de code avec un autre amplificateur à facteur d'amplification variable, dans lequel le combineur (130) est conçu pour superposer le premier signal à multiplexage de code, le deuxième signal à multiplexage de code et le troisième signal à multiplexage de code, dans lequel l'étage de bande de base à multiplexage de code (140) est conçu pour obtenir et utiliser un troisième signal de réception de bande de base, dans lequel le troisième signal de réception de bande de base représente des données du troisième signal à multiplexage de code, dans lequel la commande d'amplificateur (150) est conçue pour régler le facteur d'amplification de l'amplificateur et le facteur d'amplification de l'autre amplificateur de sorte qu'au moins deux signaux de réception de bande de base du premier au troisième signal de réception de bande de base présentent une qualité de réception minimale qui dépend de l'état de fonctionnement et peut être prédéterminée de façon variable.

**17.** Récepteur à bande multifréquence selon la revendication 16, dans lequel le premier signal à multiplexage de code représente une première bande de fréquences d'un signal de satellite et le deuxième signal à multiplexage de code représente une deuxième bande de fréquences du signal de satellite, dans lequel la première bande de fréquences présente une plus grande largeur de bande que la deuxième bande de fréquence, dans lequel le troisième signal à multiplexage de code représente une troisième bande de fréquences du signal de satellite ou d'un signal de radiocommunication mobile.

**18.** Récepteur à bande multifréquence selon l'une des revendications 1 à 17, qui présente un étage d'oscillateur (410) destiné à mettre à disposition un signal d'oscillateur local, dans lequel le premier trajet de réception (110) présente un mélangeur (326) qui peut être alimenté par le signal d'oscillateur local, et dans lequel le deuxième trajet de réception (120) présente un mélangeur (326) qui peut également être alimenté par le signal d'oscillateur local.

**19.** Récepteur à bande multifréquence selon la revendication 18, dans lequel le mélangeur (326) dans le premier trajet de réception (110) et le mélangeur (326) dans le deuxième trajet de réception (120) sont conçus comme mélangeurs de phases en quadrature en phase, dans lequel l'étage d'oscillateur (410) est conçu pour fournir le signal d'oscillateur local de sorte qu'il présente une composante de phase et une composante de phase en quadrature qui est alimentée vers le mélangeur de phases en quadrature en phase (326) dans le premier trajet de réception (110) et le mélangeur de phases en quadrature en phase (326) dans le deuxième trajet de réception (120).

**20.** Récepteur à bande multifréquence selon l'une des revendications 1 à 19, dans lequel le premier trajet de réception (110) présente une sortie en phase et une sortie de phase en quadrature, dans lequel le deuxième trajet de réception (120) présente une sortie en phase et une sortie de phase en quadrature et dans lequel l'étage de bande de base à multiplexage de code (140) présente une entrée en phase et une entrée de phase en quadrature, dans lequel le combineur (130) est conçu pour superposer un signal à la sortie en phase du premier trajet de réception (110) et un signal à la sortie en phase du deuxième trajet de réception (120) et pour les mettre à disposition de l'étage de bande de base à multiplexage de code (140) à l'entrée en phase, et dans lequel le combineur (130) est conçu pour superposer un signal à la sortie de phase en quadrature du premier trajet de réception (110) et un signal à la sortie de phase en quadrature du deuxième trajet de réception (120) et pour les mettre à disposition de l'étage de bande de base à multiplexage de code (140) à l'entrée de phase en quadrature.

21. Procédé pour recevoir des signaux à multiplexage de code par un récepteur à bande multifréquence, aux étapes suivantes consistant à:

recevoir et traiter (1210) un premier signal à multiplexage de code dans un premier trajet de réception;
recevoir et traiter (1220) un deuxième signal à multiplexage de code dans un deuxième trajet de réception, le premier trajet de réception ou le deuxième trajet de réception présentant un amplificateur à facteur d'amplification variable;
superposer (1230) le premier signal à multiplexage de code traité et le deuxième signal à multiplexage de code traité; et
traiter (1240) le signal à multiplexage de code superposé, pour obtenir et utiliser un premier signal de réception de bande de base et un deuxième signal de réception de bande de base, où le premier signal de réception de bande de base représente des données du premier signal à multiplexage de code et le deuxième signal de réception de bande de base représente les données du deuxième signal à multiplexage de code;
**caractérisé par** le réglage (1250) du facteur d'amplification de l'amplificateur à facteur d'amplification variable de sorte que le premier signal de réception de bande de base ou le deuxième signal de réception de bande de base présente une qualité de réception minimale qui dépend de l'état de fonctionnement et peut être prédéterminée de façon variable.

22. Programme d'ordinateur avec un code de programme pour réaliser le procédé selon la revendication 21 lorsque le programme d'ordinateur est exécuté sur un ordinateur ou un microcontrôleur.

FIG 1A

EP 2 526 644 B1

FIG 1B

EP 2 526 644 B1

FIG 2

FIG 3

FIG 4A

| FIG 4A | FIG 4B |

400

IF_AMP_E5  Q-IF_E5 = 0 Hz

112I

140

Basisband

Anti-Aliasing ~35 MHz

F_ABTASTEN = F_OSC = 74.5 MHz

VGA

402

112Q

I-IF_E5 = 0 Hz

IF_AMP_E5

ADC

Puffer

Q

432

Combiner

346

242

244

448

Mischer 2  E1_VGA  Q-IF2 E1 = -13.913 MHz

~35 MHz

Anti-Aliasing

VGA

F_ABTASTEN = F_OSC = 74.5 MHz

F_LO2_E1 = 397.333 MHz

404

124

122I

434

130

I-IF2 E1 = -13.913 MHz

404

E1_VGA

122Q

Puffer

I

/2  0°  90°  F_LO2_E1 = 397.333 MHz

422  423

FIG 4B

| FIG 4A | FIG 4B |

EP 2 526 644 B1

**GPS**

L5-BPSK(10)
1176.45 MHz

M-Code
BOC(10,5)

L2 PPS-
BPSK(10)
1227.60 MHz

L1C-I BOC(1,1)
1575.42 MHz

M-Code
BOC(10,5)

L1 PPS-
BPSK(10)
1575.42 MHz

Inphase

Quadraturphase

Frequenz

L2C-
BPSK(1)
1227.60 MHz

L1 SPS-
BPSK(1)
1575.42 MHz

L1C-Q
TMBOC(6,1,4/33)

**Galileo**

E5a-
BPSK(10)
1176.45 MHz

E5b-
BPSK(10)
1207.14 MHz

E6bc - BPSK(5)
1278.75 MHz

E1bc - CBOC(6,1,1/11)
1575.42 MHz

E6a -
BOCcos(10,5)

Inphase

Quadraturphase

E5-
AltBOC(15,10)
1191.795 MHz

Frequenz

E1a -
BOCcos(15,2,5)

| L5/E5 Band: ARNS und RNSS | L2 / E6 Band: nur RNSS | L1/E1 Band: ARNS und RNSS |

**FIG 5**

**FIG 6**

E1 Abbildungsfrequenz
E5a-BPSK(10)
1176.45 MHz

E5 Filter, BW=72 MHz

E5b-BPSK(10)
1207.14 MHz

E5-AltBOC(15,10)
1191.795 MHz

E1 Filter, BW=14 MHz   Image

E1bc-CBOC(6,1,1/11)
1575.42 MHz

809 MHz
(1575-2*383)MHz

LO=1192 MHz

1575 MHz   1603 MHz

erster Komplexer
Mischer mit
LO=1192 MHz

E5 BP Filter, 5MHz...35MHz

L5/E5a-BPSK(10)
-15.345 MHz

E5b-BPSK(10)
15.345 MHz

E1bc-CBOC(6,1,1/11)
383 MHz

Image
411 MHz

0 MHz

LO=397 MHz

zweiter Komplexer
Mischer mit
LO=397 MHz

E1bc-CBOC(6,1,1/11)
-14 MHz

L5/E5a-BPSK(10)
-15.345 MHz

E5b-BPSK(10)
15.345 MHz

-14 MHz  0 MHz

EP 2 526 644 B1

FIG 7

EP 2 526 644 B1

FIG 8

FIG 9

1200

Empfangen und Bearbeiten eines ersten Codemultiplex-Signals in einem ersten Empfangspfad.

1210

Empfangen und Bearbeiten eines zweiten Codemultiplex-Signals in einem zweiten Empfangspfad, wobei der erste Empfangspfad oder der zweite Empfangspfad einen Verstärker mit variablem Verstärkungsfaktor aufweist.

1220

Überlagern des ersten bearbeitteen Codemultiplex-Signals und des zweiten bearbeiteten Codemultiplex-Signals.

1230

Verarbeiten des überlagerten Codemultiplex-Signals, um ein erstes Basisband-Empfangssignal und ein zweites Basisband-Empfangssignal zu erhalten und zu verwenden, wobei das erste Basisband-Empfangssignal Daten des ersten Codemultiplex-Signals repräsentiert und das zweite Basisband-Empfangssignal Daten des zweiten Codemultipex-Signals repräsentiert.

1240

Steuern des Verstärkungsfaktors des Verstärkers mit variablem Verstärkungsfaktor, so dass das erste Basisband-Empfangssignal oder das zweite Basisband-Empfangssignal eine variabel vorgebbare, betriebszustandsabhängige Mindestempfangsqualität aufweist.

1250

FIG 10

FIG 11

| FIG 11A | FIG 11B |

FIG 11A

FIG 11B

Legend:
- E1+E5 Rauschen
- E1 Rauschen
- E5 Rauschen
- ungefiltert E1 PSD
- ungefiltert E5 PSD
- ungefiltert E1+E5 PSD

E1+E5 Rauschen
E1/E5 Rauschen
ungefiltert E5 PSD
ungefiltert E1 PSD
ungefiltert E1+E5 PSD

Frequenz [Hz]   $\times 10^7$

Leistungsspektraldichte [db/Hz]

FIG 11

| FIG | FIG |
|-----|-----|
| 11A | 11B |

# FIG 12

E5B

E5A

E1 FINE

E1 COARSE

Codeverfolgungsfehler [CM]

C/N₀[dBHz]

Legend:
- **E1 grob 4ms, 1/2 chip ELS, 2 Hz BW**
- **E1 fein 4ms, 1/8 chip ELS, 1 Hz BW**
- E5b: 4ms, 1/2 chip ELS, 1 Hz BW
- E5a: 20ms, 1/2 chip ELS, 1 Hz BW

FIG 13

E1 Superpositionsrauschverlust
E5a Superpositionsrauschverlust

E5A

E1

VGA E1 [dB]

SNR Verlust durch Kombination [dB]

C/N0 [dB]
30
31
32
33
34
35
36
37
38
39
40
41
42
43
44
45

30

45

E1 Großverfolgung

30

45

E5a Verfolgung

VGA E1 [dB]

Codeverfolgungsfehler [CM]

FIG 14

FIG 15

E1

E5a -
BPSK(10)
1176.45 MHz

E5 Filter, BW=72 MHz

E5b -
BPSK(10)
1207.14 MHz

E5 -
AltBOC(15,10)
1191.795 MHz

LO=1192 MHz

809 MHz
(1575 − 2*383)MHz

E1 Filter
BW=14 MHz GLONASS

E1bc-CBOC(6.1.1/11)
1575.42 MHz

BPSK(5.11)
1598.065...
1606.5 MHz

1575 MHz  1603 MHz
(1575+2*14)MHz

erster komplexer
Mischer mit
LO=1192 MHz

E5 BP Filter, 5MHz...35MHz

L5/E5a -
BPSK(10)
-15.345 MHz

E5b -
BPSK(10)
15.345 MHz

0 MHz
E1bc-CBOC(6.1.1/11)

BPSK(5.11)
8.7825...
17.2175 MHz

E1bc-CBOC(6.1.1/11)
383 MHz

GLONASS
411 MHz

LO=397 MHz

zweiter komplexer
Mischer mit
LO=397 MHz

-14 MHz

L5/E5a -
BPSK(10)
-15.345 MHz

E5b -
BPSK(10)
15.345 MHz

-14 MHz  0 MHz

EP 2 526 644 B1

# EP 2 526 644 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070096980 A1
- DE 102008026698 A1

**In der Beschreibung aufgeführte Nicht-Patentliteratur**

- Galileo Open Service Signal in Space Interface Control Document (OS SIS ICD), Draft 1. *techn. rep., European Space Agency/European GNSS Supervisory Authority,* Februar 2008
- **F. FOERSTER ; A. CARRERA ; N LUCAS ; G. ROHMER.** High Performance Receiver Front-End for Multiple Galileo Frequencies. *Proceedings of the 18th International Technical Meeting of the Satellite Division of the Institute of Navigation ION GNSS 2005,* September 2005, 935-940
- **A. ALONSO ; J.-M. PERRE ; I. ARIZAGA.** A Direct Sampling Digital Receiver For Multiple GNSS Signals. *Proc. of ENC-GNSS 2008,* 2008
- **E: R. PARADA ; F. CHASTELLAIN ; C. BOTTERON ; Y. TAWK ; P.-A. FARINE.** Design of a GPS and Galileo Multi-Frequency Front-End. *IEEE 69th Vehicular Technology Conference: VTC2009-Spring,* 26. April 2009
- **M. DETRATTI ; E. LOPEZ ; E. PEREZ ; R. PALACIO.** Dual-Band RF Front-End Solution for Hybrid Galileo/GPS Mass Market Receivers. *Consumer Communications and Networking Coference, 2008. CCNC 2008, 5th IEEE,* Januar 2008, 603-607
- **J. KO ; J. KIM ; S. CHO ; K. LEE.** A 19-mW 2,6 mm2L1/12 dual-band CMOS GPS receiver. *Solid-State Circuits, IEEE Journal,* Juli 2005, vol. 40, 1414-1425
- **J.-M. SLEEWAEGEN ; W. DE WILDE ; M. HOLLREISER.** Gallileo AltBOCReceiver. *Proc. Of ENC-GNSS,* 2004

- **G. X. GAO.** DME/TACAN Interference and ist Mitigation in L5/E5 Bands. *ION GNSS 20th International Technical Meeting of the Satellite Division,* 25. September 2007
- **E. D. KAPLAN ; C. J. HEGARTY.** Unterstanding GPS: Principles and Application. Artech House, 2006
- **A. RUEGAMER ; U. SANTIAGO ; G. ROHMER.** Multi-band GNSS Front-end Architecture Suitable for Integrated Circuits. *Proceedings of the 2010 International Technical Meeting of The Institute of Navigation - ION ITM 2010,* 25. Januar 2010
- **O. JULIEN.** Design of Galileo L1F Receiver Tracking Loops. *PhD thesis, UCGE Report No. 20227, The University of Calgary, Department of Geomatics Engineering,* 2005
- **C. MONGREDIEN ; M. OVERBECK ; G. ROHMER.** Development and Integration of a Robust Signal Tracking Module for the Triple-Frequency Dual-Constellation GAMMAA Receiver. *Proceedings of the 23th International Technical Meeting of the Satellite Division of the Institute of Navigation, ION GNSS 2010,* 20. September 2010
- European GNSS (Galileo) Open Service Signal In Space Interface Control Document (OS SIS ICD). *tech. rep., European Union/European GNSS Supervisory Authority (GSA),* Februar 2010
- Global Positioning System. **P. MISRA ; P. ENGE.** Signals, Measurements, and Performance. Ganga-Jamuna Press, 2006
- **P. MISRA ; P. ENGE.** Global Positioning System - Signals, Measurements, and Performance. Ganga-Jamuna Press, 2006